(19) Europäisches Patentamt
European Patent Office
Office européen des brevets

(11) EP 3 724 646 B1

(12) **FASCICULE DE BREVET EUROPEEN**

(45) Date de publication et mention de la délivrance du brevet:
**29.12.2021 Bulletin 2021/52**

(21) Numéro de dépôt: **18811580.2**

(22) Date de dépôt: **07.12.2018**

(51) Int Cl.:
***G01N 23/203*** *(2006.01)*

(86) Numéro de dépôt international:
**PCT/EP2018/083947**

(87) Numéro de publication internationale:
**WO 2019/115381 (20.06.2019 Gazette 2019/25)**

(54) **PROCÉDÉ, DISPOSITIF ET PROGRAMME DE TRAITEMENT D'IMAGES DE DIFFRACTION D'UN MATÉRIAU CRISTALLIN**

VERFAHREN, VORRICHTUNG UND PROGRAMM ZUR VERARBEITUNG VON BEUGUNGSBILDERN EINES KRISTALLINEN MATERIALS

METHOD, DEVICE AND AND PROGRAM FOR PROCESSING DIFFRACTION IMAGES OF A CRYSTALLINE MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2017 FR 1761926**

(43) Date de publication de la demande:
**21.10.2020 Bulletin 2020/43**

(73) Titulaires:
- **Electricité de France**
  **75008 Paris (FR)**
- **Centre National de la Recherche Scientifique - CNRS**
  **75016 Paris (FR)**
- **Ecole Normale Supérieure de Paris-Saclay**
  **91190 Gif-sur-Yvette (FR)**

(72) Inventeurs:
- **LATOURTE, Félix**
  **50100 CHERBOURG (FR)**
- **SHI, Qiwei**
  **SHANGHAI, 200240 (CN)**
- **HILD, François**
  **92290 CHATENAY MALABRY (FR)**
- **ROUX, Stéphane**
  **93110 ROSNY-SOUS-BOIS (FR)**

(74) Mandataire: **Regimbeau**
**Parc d'affaires Cap Nord A**
**2, allée Marie Berhaut**
**CS 71104**
**35011 Rennes Cedex (FR)**

(56) Documents cités:
- **Raghavendra Nataraj Saralaya: "In-situ Grain Scale Strain Measurements using Digital Image Correlation" In: "In-situ Grain Scale Strain Measurements using Digital Image Correlation", juin 2012 (2012-06), Drexel University, XP055502805, figure 4 page 31 - page 48**
- **JUN JIANG ET AL: "Deformation compatibility in a single crystalline Ni superalloy", ROYAL SOCIETY OF LONDON. PROCEEDINGS. MATHEMATICAL, PHYSICAL AND ENGINEERING SCIENCES, vol. 472, no. 2185, 13 janvier 2016 (2016-01-13), page 20150690, XP055502792, GB ISSN: 1364-5021, DOI: 10.1098/rspa.2015.0690**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 724 646 B1

## Description

L'invention concerne un procédé de traitement d'images, obtenues par détecteur à diffraction.

Le domaine d'application de l'invention concerne l'analyse de matériaux cristallins ou polycristallins, et notamment l'analyse par diffraction rétrodiffusée en haute résolution (en anglais : HR-EBSD pour High Resolution Electron Back-Scatter Diffraction). Notamment, le détecteur peut être un détecteur à diffraction électronique produisant des figures de diffraction électronique, appelées figures de Kikuchi, dont l'analyse permet de calculer très précisément les variations (relatives) des paramètres de maille cristalline.

On cherche notamment à comparer des paramètres de maille cristalline d'un même matériau se trouvant dans des états de contraintes différents, ce qui affecte ces paramètres. L'ensemble de l'information obtenue, point par point, lors du balayage de la surface d'un échantillon est habituellement présenté sous la forme d'images bidimensionnelles pour différentes composantes de la cristallographie, voire de la qualité de l'analyse, ou du degré de confiance qu'on lui accorde.

On connaît dans l'état de l'art de la technique, la comparaison de figures de diffraction entre deux états différents à l'aide d'algorithmes basés sur une inter-corrélation, par exemple par le logiciel dénommé Crosscourt et par le logiciel dénommé Straincorrelator, également basé sur le logiciel Crosscourt. Cette inter-corrélation repose sur un découpage des images suivant des imagettes (également nommées zones d'intérêt), dont on suit le mouvement en vue d'obtenir un champ de déplacement discrétisé sur les centres de chaque imagette.

Les documents Raghavendra Nataraj Saralaya: "In-situ Grain Scale Strain Measurements using Digital Image Correlation", juin 2012, Drexel University, XP055502805 et JUN JIANG ET AL: "Deformation compatibility in a single crystalline Ni superalloy", Proc. R. Soc. A, 472:20150690, 13 janvier 2016, XP055502792, GB ISSN: 1364-5021, DOI: 10.1098/rspa.2015.0690 divulguent aussi des procédés de traitement d'images de diffraction.

Cette inter-corrélation d'imagettes possède de nombreux inconvénients.

Chaque imagette fournit un déplacement moyen par inter-corrélation. Pour que le traitement fonctionne, la taille de l'imagette doit être grande pour contenir un nombre suffisant de bandes de Kikuchi. Afin d'obtenir un champ de déplacement assez riche, il est obligatoire de prendre un nombre important d'imagettes, en pratique variant entre 25 et 100. Du fait de ce nombre élevé et de la taille également importante des imagettes, des chevauchements importants entre imagettes existent. D'une part, cela ralentit considérablement le traitement de corrélation car les pixels d'une même imagette sont pris plusieurs fois en compte. D'autre part, ces chevauchements introduisent de fortes corrélations spatiales entre imagettes de sorte que l'augmentation du nombre d'imagettes, à partir d'un certain seuil, ne permet ni de diminuer l'incertitude de mesure, ni de réduire des biais systématiques.

En outre, le choix de positionnement des imagettes influence les résultats obtenus, ce qui est une manifestation de la non optimalité de la méthode utilisée. En cas de relativement grandes déformations, des rotations importantes des motifs peuvent être observées, supérieures à un degré.

Le déplacement étant cherché par imagette au moyen d'une translation pure, la base cinématique n'est alors qu'approximative pour reproduire la transformation observée sur les images. En conséquence, l'inter-corrélation provoque des erreurs importantes, par exemple, des contraintes évaluées dans les zones de fortes rotations.

L'invention vise à obtenir un procédé et un dispositif de traitement d'images qui pallient les inconvénients de l'état de l'art de la technique en permettant de calculer le champ de déplacement entre les images, avec une meilleure qualité et un coût de calcul plus bas.

A cet effet, un premier objet de l'invention est un procédé de traitement d'images, obtenues par un détecteur à diffraction, d'un matériau cristallin ou polycristallin, dans lequel on mesure par le détecteur :

- une première image de diffraction du matériau se trouvant dans un état de référence, donnant des premières valeurs numériques de pixels en fonction de deux coordonnées de pixels,
- au moins une deuxième image de diffraction du matériau se trouvant dans un état déformé par rapport à l'état de référence, la deuxième image donnant des deuxièmes valeurs numériques de pixels en fonction des coordonnées de pixels (les valeurs numériques de pixels des images pouvant être des niveaux de gris ou des valeurs de luminance et étant notamment des valeurs de l'intensité du faisceau diffracté en un point du détecteur).

Suivant l'invention, dans un calculateur, un champ de déplacement, pour déplacer des pixels de la première image à des pixels d'une image déformée, en fonction :

- des deux coordonnées des pixels,
- de coordonnées prédéterminées d'un centre, correspondant à la projection normale, dans le plan d'image du détecteur, d'un point source du faisceau diffracté dans le matériau, et
- de composantes d'un tenseur gradient de déformation élastique,

est préenregistrée dans une mémoire.

Au cours d'une première étape de calcul, on fait prendre au tenseur gradient de déformation élastique courant une valeur déterminée du tenseur gradient de déformation élastique.

Au cours d'une deuxième étape de calcul, on calcule le champ de déplacement courant à partir du tenseur gradient de déformation élastique courant et des coordonnées de pixels de la première image.

Au cours d'une troisième étape de calcul, on calcule des troisièmes valeurs numériques de pixels d'une image déformée en corrigeant la deuxième image aux coordonnées de pixels auxquelles a été additionné le champ de déplacement courant. Ainsi, l'image déformée est corrigée du champ de déplacement courant, et est appelé troisième image ou image déformée corrigée ayant des troisièmes valeurs de pixels, pour la distinguer des première et deuxième images.

Au cours d'un algorithme itératif, on effectue des itérations des première, deuxième et troisième étapes de calcul sur des valeurs déterminées de tenseur modifiées, jusqu'à remplir un critère de convergence sur la valeur déterminée du tenseur gradient de déformation élastique, pour calculer le champ de déplacement correspondant.

On décrit ci-dessous des modes de réalisation des différentes étapes de ce procédé.

Ainsi, suivant un mode de réalisation, le détecteur à diffraction permet notamment de mesurer une configuration de référence de la géométrie de la diffraction, associant aux coordonnées de chaque pixel, une direction du faisceau électronique diffracté, et dont l'origine correspondant à la projection normale dans le plan d'image du détecteur, du point source du faisceau diffracté dans le matériau,

- une première figure de diffraction (de Kikuchi) du matériau se trouvant dans un état de référence, donnant une image dite de référence, soit une image en niveaux de gris dont la valeur numérique correspond en chaque pixel à une densité d'électrons diffractés dans la direction géométriquement reliée à la position du pixel,
- au moins une deuxième figure de diffraction se trouvant dans un état déformé par rapport à l'état de référence, cette deuxième image donnant des deuxièmes valeurs numériques de niveaux de gris en chaque pixel.

Suivant un mode de réalisation, le champ de déplacement est défini en chaque pixel, pour apparier les pixels de la première image de diffraction aux pixels de l'image de diffraction du cristal déformé, de manière à faire coïncider au mieux les niveaux de gris des pixels appariés, ce champ de déplacement étant ainsi associé à une direction du faisceau diffracté et prenant une forme algébrique dont l'expression est une fonction connue du tenseur gradient de déformation élastique.

Suivant un mode de réalisation, au cours de la première étape de calcul, le tenseur gradient de déformation élastique courant est initialisé à une valeur prédéterminée de tenseur et est actualisé au cours des itérations.

Suivant un mode de réalisation, au cours de la troisième étape de calcul, on calcule les troisièmes valeurs numériques de pixel de la troisième image déformée, mentionnées ci-dessus, en interpolant la deuxième image aux coordonnées de pixels auxquelles a été additionné le champ de déplacement courant.

Dans le cadre de l'invention, on fournit les troisièmes valeurs de pixels d'une image déformée, qui sont une correction de la deuxième image, s'appuyant sur une majeure partie de l'image, en un temps plus court. Le calcul procuré par l'invention réduit en outre l'incertitude de mesure du champ de déplacement entre la première image et la deuxième image. L'invention est ainsi spécialement adaptée, dans des modes réalisation, au calcul à partir de la troisième image, d'une déformation du matériau entre la première image et la deuxième image.

Suivant un mode de réalisation de l'invention, le tenseur $\hat{\mathbf{F}}^e$ gradient de déformation élastique est égal à

$$\left[\hat{\mathbf{F}}^e\right] = \begin{bmatrix} \hat{F}_1^e & \hat{F}_2^e & \hat{F}_3^e \\ \hat{F}_4^e & \hat{F}_5^e & \hat{F}_6^e \\ \hat{F}_7^e & \hat{F}_8^e & 1 \end{bmatrix}$$

où $\hat{F}_1^e, \hat{F}_2^e, \hat{F}_3^e, \hat{F}_4^e, \hat{F}_5^e, \hat{F}_6^e, \hat{F}_7^e, \hat{F}_8^e$ sont les composantes du tenseur $\hat{\mathbf{F}}^e$ gradient de déformation élastique.

Suivant un mode de réalisation de l'invention, le champ de déplacement, $u_x$, $u_y$, pour déplacer des pixels de la première image à des pixels d'une image déformée, en fonction :

- des deux coordonnées *x,y* de pixels,
- des coordonnées prédéterminées $x^*$, $y^*$, $z^*$ du centre, correspondant à la projection normale, dans le plan d'image du détecteur, du point source du faisceau diffracté dans le matériau, et

- des composantes $\hat{F}_1^e, \hat{F}_2^e, \hat{F}_3^e, \hat{F}_4^e, \hat{F}_5^e, \hat{F}_6^e, \hat{F}_7^e, \hat{F}_8^e$ du tenseur $\hat{\mathbf{F}}^e$ gradient de déformation élastique,

est égal à

$$u_x(x,y) = \frac{z^*(\hat{F}_1^e(x-x^*)+\hat{F}_2^e(y-y^*)+\hat{F}_3^e z^*)}{\hat{F}_7^e(x-x^*)+\hat{F}_8^e(y-y^*)+z^*} - (x-x^*)$$

$$u_y(x,y) = \frac{z^*(\hat{F}_4^e(x-x^*)+\hat{F}_5^e(y-y^*)+\hat{F}_6^e z^*)}{\hat{F}_7^e(x-x^*)+\hat{F}_8^e(y-y^*)+z^*} - (y-y^*)$$

Suivant un mode de réalisation de l'invention, l'algorithme itératif est effectué par une méthode de type Gauss-Newton.

Suivant un mode de réalisation de l'invention, au cours de l'algorithme itératif, on calcule un vecteur $\{\delta\hat{F}^e\}$ de correction vérifiant l'équation

$$[\mathbf{M}]\{\delta\hat{F}^e\} = \{\boldsymbol{\gamma}\}$$

où **[M]** est une matrice hessienne de dimension 8 × 8, ayant comme coefficients

$$M_{ij}^{(n-1)} = \sum_{ROI}\left(\nabla f(\mathbf{x})\cdot\mathbf{\Phi}_i\left(\mathbf{x},\{\hat{F}^e\}\right)\right)\left(\nabla f(\mathbf{x})\cdot\mathbf{\Phi}_j\left(\mathbf{x},\{\hat{F}^e\}\right)\right)$$

où f représente les premières valeurs de pixels de la première image, **x** représente les deux coordonnées (x, y) de pixels,

$\Phi_i(\mathbf{x};\{\hat{F}^e\})$ est un champ de sensibilité du champ de déplacement par rapport à la composante $\hat{F}_i^e$ du tenseur $\hat{\mathbf{F}}^e$ gradient de déformation élastique et est égal à la dérivée partielle du champ de déplacement par rapport à chaque composante $\hat{F}_i^e$ du tenseur $\hat{\mathbf{F}}^e$ gradient de déformation élastique,
{y} est le vecteur de résidus ayant comme composantes

$$\gamma_i^{(n)} = \sum_{ROI}\left(f(\mathbf{x}) - \tilde{g}^{(n)}\left(\mathbf{x},\{\hat{F}^e\}\right)\right)\nabla f(\mathbf{x})\cdot\mathbf{\Phi}_i\left(\mathbf{x},\{\hat{F}^e\}\right),$$

et
$\tilde{g}^{(n)}(\mathbf{x},\{\hat{F}^e\}) = \tilde{g}_u(\mathbf{x}) = g(\mathbf{x}+\mathbf{u}(\mathbf{x}))$ est la troisième valeur numérique de chaque pixel de l'image déformée et g représente les deuxièmes valeurs de pixels de la deuxième image,
le critère de convergence sur la valeur déterminée $\hat{F}^e$ de tenseur étant que la norme du vecteur $\{\delta\hat{F}^e\}$ de correction soit inférieure à une borne positive prescrite ($\delta_\varepsilon$), non nulle,
la valeur déterminée $\{\hat{F}^e\}$ de tenseur étant incrémentée du vecteur $\{\delta\hat{F}^e\}$ de correction à chaque itération de la première étape de calcul.

Suivant un mode de réalisation de l'invention, le tenseur $\{\hat{F}^e\}$ gradient de déformation élastique possède, comme composantes $\hat{F}_i^e$, huit composantes $\hat{F}_1^e, \hat{F}_2^e, \hat{F}_3^e, \hat{F}_4^e, \hat{F}_5^e, \hat{F}_6^e, \hat{F}_7^e, \hat{F}_8^e$ et une neuvième composante fixée à 1, à savoir selon l'équation suivante :

$$\left[\hat{\mathbf{F}}^e\right]=\begin{bmatrix}\hat{F}_1^e & \hat{F}_2^e & \hat{F}_3^e\\ \hat{F}_4^e & \hat{F}_5^e & \hat{F}_6^e\\ \hat{F}_7^e & \hat{F}_8^e & 1\end{bmatrix}$$

le champ de sensibilité du champ **u(x)** de déplacement a comme composantes $\Phi_i(\mathbf{x};\{\hat{F}^e\})$ les composantes selon les équations suivantes :

$$\Phi_{x1}=\frac{z^*(x-x^*)}{\hat{F}_7^e(x-x^*)+\hat{F}_8^e(y-y^*)+z^*}$$

$$\Phi_{x2}=\frac{z^*(y-y^*)}{\hat{F}_7^e(x-x^*)+\hat{F}_8^e(y-y^*)+z^*}$$

$$\Phi_{x3}=\frac{(z^*)^2}{\hat{F}_7^e(x-x^*)+\hat{F}_8^e(y-y^*)+z^*}$$

$$\Phi_{x4}=0$$

$$\Phi_{x5}=0$$

$$\Phi_{x6}=0$$

$$\Phi_{x7}=-\frac{z^*(x-x^*)(\hat{F}_1^e(x-x^*)+\hat{F}_2^e(y-y^*)+\hat{F}_3^e z^*)}{\left(\hat{F}_7^e(x-x^*)+\hat{F}_8^e(y-y^*)+z^*\right)^2}$$

$$\Phi_{x8}=-\frac{z^*(y-y^*)(\hat{F}_1^e(x-x^*)+\hat{F}_2^e(y-y^*)+\hat{F}_3^e z^*)}{\left(\hat{F}_7^e(x-x^*)+\hat{F}_8^e(y-y^*)+z^*\right)^2}$$

$$\Phi_{y1}=0$$

$$\Phi_{y2}=0$$

$$\Phi_{y3}=0$$

$$\Phi_{y4} = \frac{z^*(x-x^*)}{\hat{F}_7^e(x-x^*) + \hat{F}_8^e(y-y^*) + z^*}$$

$$\Phi_{y5} = \frac{z^*(y-y^*)}{\hat{F}_7^e(x-x^*) + \hat{F}_8^e(y-y^*) + z^*}$$

$$\Phi_{y6} = \frac{(z^*)^2}{\hat{F}_7^e(x-x^*) + \hat{F}_8^e(y-y^*) + z^*}$$

$$\Phi_{y7} = -\frac{z^*(x-x^*)(\hat{F}_4^e(x-x^*) + \hat{F}_5^e(y-y^*) + \hat{F}_6^e z^*)}{\left(\hat{F}_7^e(x-x^*) + \hat{F}_8^e(y-y^*) + z^*\right)^2}$$

$$\Phi_{y8} = -\frac{z^*(y-y^*)(\hat{F}_4^e(x-x^*) + \hat{F}_5^e(y-y^*) + \hat{F}_6^e z^*)}{\left(\hat{F}_7^e(x-x^*) + \hat{F}_8^e(y-y^*) + z^*\right)^2}$$

Suivant un mode de réalisation de l'invention, le procédé de traitement d'images est exécuté pour la majeure partie ou pour l'ensemble des pixels de la première image et de la deuxième image.

Suivant un mode de réalisation de l'invention, les première et deuxième images sont obtenues après filtrage de valeurs de pixels surexposés en les remplaçant par une moyenne de pixels voisins de ceux-ci. On filtre ainsi des valeurs aberrantes (bruit classiquement défini comme « poivre et sel » qui intervient pour certains détecteurs).

Suivant un mode de réalisation de l'invention, les première et deuxième images sont obtenues après filtrage des valeurs de pixels par soustraction de tendances globales de niveau de gris, représentées par un polynôme d'ordre 2 ou 3 obtenu par un processus de régression.

Suivant un mode de réalisation de l'invention, les première et deuxième images sont obtenues après filtrage des valeurs de pixels par un filtre de lissage gaussien.

Suivant un mode de réalisation de l'invention, le procédé de traitement d'images est exécuté pour plusieurs deuxièmes images.

Suivant un mode de réalisation de l'invention, l'on fournit sur une sortie au moins l'un parmi :

- le tenseur gradient de déformation élastique, calculé comme remplissant le critère de convergence,
- un résidu, calculé comme étant la différence entre d'une part les troisièmes valeurs numériques de pixels de l'image déformée corrigée, ayant été calculées pour le champ de déplacement correspondant comme remplissant le critère de convergence sur la valeur déterminée du tenseur gradient de déformation élastique, et d'autre part les premières valeurs numériques de pixels de la première image,
- une moyenne quadratique des résidus calculés pour respectivement plusieurs deuxièmes images,
- le champ de déplacement correspondant, calculé comme remplissant le critère de convergence sur la valeur déterminée du tenseur gradient de déformation élastique,
- une image déformée corrigée, correspondant aux troisièmes valeurs numériques de pixel ayant été calculées à partir du champ de déplacement correspondant, calculé comme remplissant le critère de convergence.

Suivant un mode de réalisation de l'invention, les première et deuxième images sont obtenues après soustraction d'un fond d'image.

Un deuxième objet de l'invention est un dispositif de traitement d'images d'un matériau cristallin ou polycristallin, comportant un détecteur à diffraction permettant d'acquérir :

- une première image de diffraction du matériau se trouvant dans un état de référence, donnant des premières valeurs numériques de pixels en fonction de deux coordonnées de pixels,

- au moins une deuxième image de diffraction du matériau se trouvant dans un état déformé par rapport à l'état de référence, la deuxième image donnant des deuxièmes valeurs numériques de pixels en fonction des coordonnées de pixels,

caractérisé en ce que le dispositif comporte au moins un calculateur, comportant au moins une mémoire, dans laquelle est enregistrée un champ de déplacement, pour déplacer des pixels de la première image à des pixels d'une image déformée, en fonction :

- des deux coordonnées de pixels,
- de coordonnées prédéterminées d'un centre, correspondant à la projection normale, dans le plan d'image du détecteur, d'un point source du faisceau diffracté dans le matériau, et
- de composantes d'un tenseur gradient de déformation élastique,

le calculateur étant configuré pour

au cours d'une première étape de calcul, faire prendre au tenseur gradient de déformation élastique courant une valeur déterminée,
au cours d'une deuxième étape de calcul, calculer le champ de déplacement courant en à partir du tenseur gradient de déformation élastique courant et des coordonnées pour chacun des pixels de la première image,
au cours d'une troisième étape de calcul, calculer des troisièmes valeurs numériques de pixels d'une image déformée en appliquant la deuxième image aux coordonnées de pixels auxquelles a été additionné le champ de déplacement courant,
au cours d'un algorithme itératif, effectuer des itérations des première, deuxième et troisième étapes de calcul sur des valeurs déterminées de tenseur réactualisées, jusqu'à remplir un critère de convergence sur la valeur déterminée du tenseur gradient de déformation élastique, pour calculer le champ de déplacement correspondant.

Un troisième objet de l'invention est un programme d'ordinateur, comportant des instructions de code pour la mise en œuvre des étapes de calcul du procédé de traitement d'images d'un matériau cristallin ou polycristallin tel que décrit ci-dessus, lorsqu'il est exécuté sur un calculateur.

L'invention sera mieux comprise à la lecture de la description qui va suivre, donnée uniquement à titre d'exemple non limitatif en référence aux dessins annexés, sur lesquels :

- la figure 1 représente schématiquement un dispositif d'acquisition et de traitement d'images suivant un mode de réalisation de l'invention,
- la figure 2 représente schématiquement en perspective la projection des faisceaux diffractés par un dispositif de traitement d'images suivant un mode de réalisation de l'invention ainsi que l'effet produit par le tenseur gradient de déformation élastique sur le faisceau diffracté,
- la figure 3 représente schématiquement en vue de côté la projection des faisceaux diffractés par un dispositif de traitement d'images suivant un mode de réalisation de l'invention,
- la figure 4 représente schématiquement un organigramme du procédé de traitement d'images suivant un mode de réalisation de l'invention,
- La figure 5A montre une image d'une éprouvette, prise par un microscope électronique à balayage,
- La figure 5B montre une image obtenue à partir de la figure 5A par un logiciel de l'état de l'art de la technique,
- La figure 5C montre une échelle des couleurs de la figure 5B,
- les figures 6A et 6B montrent un exemple d'images de départ de diffraction d'une éprouvette,
- la figure 6C représente la différence obtenue entre les images des figures 6A et 6B,
- la figure 6D représente une valeur calculée pour un tenseur gradient de déformation élastique apparaissant dans le procédé et le dispositif de traitement d'images suivant un mode de réalisation de l'invention, dans l'exemple des figures 6A et 6B,
- les figures 6E, 6F, 6G, 6H et 6I représentent des images apparaissant dans différentes étapes du procédé et du dispositif de traitement d'images suivant des modes de réalisation de l'invention, dans l'exemple des figures 6A et 6B,
- les figures 7A, 7B, 7C, 7D et 7E représentent des composantes d'un tenseur de contrainte obtenues par le procédé et le dispositif de traitement d'images suivant des modes de réalisation de l'invention, à partir de la figure 5A,
- La figure 8A représente une contrainte équivalente de von Mises obtenue par le procédé et le dispositif de traitement d'images suivant des modes de réalisation de l'invention, à partir de la figure 5A, et la figure 8B représente un histogramme de cette contrainte.

A la figure 1, dans le procédé de traitement d'images suivant l'invention, au cours d'une étape préalable de mesure, on obtient par un détecteur 10 (ou capteur 10 ou caméra 10) à diffraction, des images numériques (ou clichés) d'un matériau CR cristallin ou polycristallin. Le détecteur 10 peut être un détecteur à diffraction rétrodiffusée en haute résolution d'images, dit EBSD ou HR-EBSD (en anglais : HR-EBSD pour High Resolution Electron Back-Scattered Diffraction). Bien entendu, d'autres types de détecteur 10 à diffraction peuvent être utilisés.

On mesure par le détecteur 10 une première image f du matériau CR se trouvant dans un état de référence, donnant des premières valeurs numériques $f(x,y)$ de pixels (par exemple des niveaux de gris ou autres) en fonction des deux coordonnées $x,y$ des pixels. On mesure également par le détecteur EBSD une ou plusieurs deuxième(s) image(s) g du matériau CR se trouvant dans un état déformé par rapport à l'état de référence. La deuxième image $g$ donne des deuxièmes valeurs numériques g(x,y) de pixel (par exemple des niveaux de gris) en fonction des deux coordonnées $x$, $y$ des pixels. Les images $f$ et $g$ sont choisies lors de l'étape E2 de la figure 4. Aux figures 2 et 3, les 3 directions **x**, **y** et **z** sont orthonormales entre elles.

Suivant un mode de réalisation de l'invention, l'état déformé et l'état de référence sont obtenus en appliquant des sollicitations mécaniques différentes au matériau CR, par exemple en n'appliquant aucune sollicitation mécanique au matériau CR dans l'état de référence et en appliquant une sollicitation mécanique déterminée au matériau CR dans l'état déformé. Dans ce cas, il peut être prévu des moyens pour exercer et/ou contrôler une sollicitation mécanique sur le matériau CR.

Ainsi que représenté à la figure 1, le détecteur 10 fait partie d'un dispositif 1 de mesure comportant une source interne 2 d'émission d'un faisceau 3 de particules incidentes et le détecteur 10 à diffraction rétrodiffusée. La source 2 et le faisceau 3 de particules incidentes sont positionnés par rapport au matériau CR pour que le matériau CR émette, par interaction du matériau CR avec le faisceau 3 de particules incidentes, un ou plusieurs faisceaux 4 de particules diffracté(s). Le faisceau 3 peut être ou comprendre un faisceau de rayons X, ou un faisceau d'électrons, ou autres. Le faisceau 4 diffracté peut également correspondre à une diffraction de type Kossel, une diffraction de type Laue ou une diffraction dans un microscope électronique à transmission (notamment à diffraction TKD, qui est l'abréviation en anglais de « Transmission Kikuchi Diffraction », diffraction Kikuchi en transmission, réalisée dans un microscope électronique à transmission). Le détecteur est positionné par rapport à la source 2, au faisceau 3 de particules incidentes et au matériau CR, pour recevoir ou intercepter le ou les faisceaux 4 de particules diffracté(s), issus du matériau CR en réponse au faisceau 3 de particules incidentes. Le détecteur 10 comporte par exemple un écran 11 de réception du ou des faisceau(x) 4 de particules diffracté(s). L'écran 11 de réception possède une étendue déterminée, par exemple bidimensionnelle et plane, ou autre. L'écran 11 de réception est relié à une unité 12 d'enregistrement et de production des images $f$, $g$ (pouvant être une unité 12 de calcul automatique) à partir du ou des faisceau(x) 4 de particules diffracté(s), reçu(s) ou intercepté(s) par l'écran 11 de réception. Le faisceau 3 de particules incidentes peut être ou contenir un rayonnement monochromatique incident de longueur d'onde déterminée ou plusieurs rayonnements monochromatiques incidents de longueurs d'ondes déterminées différentes. Le détecteur 10 peut faire par exemple partie d'un microscope électronique, notamment un microscope électronique à transmission et/ou à balayage. L'écran 11 peut être par exemple un écran phosphorescent, ou autre.

Suivant des modes de réalisation de l'invention, le phénomène de diffraction du faisceau 3 de particules incidentes par le matériau CR donne lieu sur le détecteur 10 à un diagramme de Laue dans le cas où le faisceau 3 de particules incidentes est un faisceau de rayons X, et à un cliché de Kikuchi dans le cas où le faisceau 3 de particules incidentes est un faisceau d'électrons.

D'après la loi de Bragg, le rayonnement monochromatique incident 3 de longueur d'onde $\lambda$ va diffracter sur les plans cristallins $hkl$ (ou plans diffractants $hkl$) du matériau CR en respectant :

$$n\lambda = 2d_{hkl} \sin\theta \qquad (1)$$

où $n$ est l'ordre de diffraction et $d_{hkl}$ la distance inter-réticulaire des plans $hkl$. L'angle $\theta$ est le demi-angle entre le faisceau incident 3 et le faisceau diffracté 4. Un matériau CR cristallin dont la maille élémentaire est décrite par le repère **(a, b, c)** possède un réseau réciproque dont le repère est (**a***, **b***, **c***). Par définition, **a*** est tel que $\mathbf{a} \cdot \mathbf{a}^* = 1$ , $\mathbf{b} \cdot \mathbf{a}^* = \mathbf{c} \cdot \mathbf{a}^* = 0$. Idem pour **b*** et **c*** par permutation circulaire.

Soit $\mathbf{k}_i$ le vecteur d'onde du faisceau incident et $\mathbf{k}_f$ le vecteur d'onde du faisceau diffracté. La diffraction résultant de processus élastiques (sans perte d'énergie), la norme des vecteurs est identique, $|\mathbf{k}_f| = |\mathbf{k}_i| = \lambda^{-1}$, et donc $\mathbf{k}_f$ décrit un cercle de rayon égal à la norme de $\mathbf{k}_i$. Le vecteur de diffraction **q**, défini comme :

$$\mathbf{q} = \mathbf{k}_f - \mathbf{k}_i \qquad (2)$$

est donc un vecteur qui, si son origine est positionnée à l'extrémité du vecteur $\mathbf{k}_i$, parcourt alors un cercle de même

rayon $1/\lambda$ centré sur l'origine du vecteur $\mathbf{k}_i$.

Dans ce même espace réciproque, la condition de Bragg peut s'exprimer par la condition de coïncidence entre le vecteur $\mathbf{q}^{(hkl)}$ de la famille de plans cristallins *hkl,* et le vecteur de diffraction **q**. Seules quelques directions favorables donnent lieu à une diffraction cohérente.

Suivant un mode de réalisation de l'invention, le faisceau d'électrons adopté en EBSD a une longueur d'onde $\lambda$ très faible et $\theta$ est généralement inférieur à 2°. Les électrons en condition de diffraction restent donc à proximité de la trace du plan cristallin 40 sur lequel ils diffractent, ainsi que représenté à la figure 1.

Suivant un mode de réalisation de l'invention, dans le cas où la source 2 est divergente, les faisceaux diffractés 4 se répartissent sur deux cônes de Kossel CO de manière symétrique par rapport à la trace du plan cristallin 40. Les cônes de Kossel CO captés par le détecteur 10 peuvent avoir une forme de deux hyperboles extrêmement ouvertes, ainsi que représenté à la figure 1.

Suivant un mode de réalisation de l'invention, la première image *f* de l'état de référence et la deuxième image g de l'état déformé sont obtenues lors d'une unique acquisition par balayage de la surface d'un échantillon du matériau CR. L'état de référence est alors pris au centre du grain (supposé le moins contraint) que l'on compare alors avec des clichés de diffraction acquis en périphérie du grain.

Suivant un mode de réalisation de l'invention, aux figures 2 et 3, un centre O correspondant à la projection normale, dans le plan 110 d'image de l'écran 11 du détecteur 10, d'un point source S du faisceau diffracté 4 dans le matériau CR, a deux coordonnées prédéterminées ($x^*$, $y^*$) dans le plan 110 de l'écran 11. La projection du ou des faisceau(x) diffracté(s) 4 sur le détecteur 10 est illustrée dans un exemple non limitatif aux figures 2 et 3. Le détecteur 10 est choisi comme référentiel dans toute la suite. A la figure 2, le coin B en bas à gauche de l'écran 11 plan est considéré comme origine, l'axe **x** est l'axe horizontal dans le plan de l'écran 110, l'axe **y** est l'axe vertical dans le plan de l'écran 110, et l'axe **z** est l'axe normal au plan de l'écran 110. Le faisceau 3 d'électrons incidents est dirigé sur l'éprouvette avec une inclinaison de 70° par rapport à la normale et un point "central" S dans le volume d'interaction du matériau CR est considéré comme source "effective" des électrons diffractés 4. Le centre de projection O est la projection normale (par rapport au plan de l'écran 11) du point S sur le plan 110 de l'écran 11. Ses coordonnées sont notées ($x^*$, $y^*$, 0). On note $z^*$ la distance entre le point source S et le centre O, donc S a pour coordonnées ($x^*$, $y^*$ , $-z^*$).

Suivant un mode de réalisation de l'invention, on note **F** un tenseur gradient de déformation selon l'équation ci-dessous, qui, appliqué à un point courant **X** dans la configuration initiale du matériau CR de référence, permet d'obtenir sa position **x** dans la configuration déformée :

$$[\mathbf{F}] = \left[\frac{d\mathbf{x}}{d\mathbf{X}}\right] = \begin{bmatrix} \frac{\partial x}{\partial X} & \frac{\partial x}{\partial Y} & \frac{\partial x}{\partial Z} \\ \frac{\partial y}{\partial X} & \frac{\partial y}{\partial Y} & \frac{\partial y}{\partial Z} \\ \frac{\partial z}{\partial X} & \frac{\partial z}{\partial Y} & \frac{\partial z}{\partial Z} \end{bmatrix}$$

A titre d'exemple, la figure 1 représente la diffraction du faisceau dans la chambre du microscope, se projetant sur l'écran de la caméra EBSD, représenté pour deux états cristallins et le tenseur gradient de transformation associé pour passer d'un état à l'autre. La figure 3 détaille la projection, et représente le point source S et le centre de projection.

Suivant un mode de réalisation de l'invention, le tenseur gradient de déformation **F** est le produit de deux parties : la partie élastique $\mathbf{F}^\mathbf{e}$ (tenseur gradient de déformation élastique) et la partie plastique $\mathbf{F}^\mathbf{p}$ selon l'équation suivante :

$$\mathbf{F} = \mathbf{F}^e\,\mathbf{F}^p$$

Suivant un mode de réalisation de l'invention, la déformation plastique a pour effet de rendre les bandes de Kikuchi moins nettes, un effet difficile à quantifier et qui n'autorise pas la mesure de la déformation plastique par l'analyse d'images de diffraction. En cas de déformation élastique hydrostatique, on observe une variation de la largeur des bandes de Kikuchi sur le détecteur. Au contraire, la déformation élastique déviatorique modifie la forme de la maille cristalline, c.-à-d. l'orientation relative des plans cristallins, donc les relations angulaires à l'intérieur du cristal. La projection sur un écran loin de la source amplifie l'écart angulaire entre deux faisceaux et donne lieu à une variation mesurable entre les clichés.

Suivant un mode de réalisation de l'invention, comme seules huit composantes de $\mathbf{F}^e$ sont mesurables, il faut définir une convention fixant ce degré de liberté manquant. Suivant un mode de réalisation, on choisit le seul tenseur $\hat{\mathbf{F}}^e$ ayant huit composantes $\hat{F}_1^e, \hat{F}_2^e, \hat{F}_3^e, \hat{F}_4^e, \hat{F}_5^e, \hat{F}_6^e, \hat{F}_7^e, \hat{F}_8^e$ et une neuvième composante fixée à 1, à savoir selon l'équation ci-dessous :

$$\left[\hat{\mathbf{F}}^e\right] = \begin{bmatrix} \hat{F}_1^e & \hat{F}_2^e & \hat{F}_3^e \\ \hat{F}_4^e & \hat{F}_5^e & \hat{F}_6^e \\ \hat{F}_7^e & \hat{F}_8^e & 1 \end{bmatrix}$$

Suivant un mode de réalisation de l'invention, le gradient de déformation élastique vrai est alors selon l'équation ci-dessous :

$$\mathbf{F}^e = \left(\frac{\partial z}{\partial Z}\right)\hat{\mathbf{F}}^e$$

Le facteur $\delta z/\delta Z$ n'est pas mesurable mais peut être déterminé par des hypothèses supplémentaires (comme par exemple le choix d'un état de contrainte plane qui est souvent adopté).

Suivant un mode de réalisation de l'invention, considérons un élément $\Delta\mathbf{X}$ dans le réseau cristallin de référence du matériau CR. Supposons que cette direction particulière donne lieu à un faisceau diffracté 4 qui intersecte le détecteur 10 au point P, de coordonnées $(x,y,0)$. Dans la suite, nous notons **p** le vecteur SP. Nous avons $(\mathbf{p}) = (\Delta x, \Delta y, \Delta z)^T = (x-x^*, y-y^*, z^*)^T = \alpha\Delta\mathbf{X}$, où $\alpha$ est l'échelle de projection.

Si le volume d'interaction autour du point source S est soumis à une déformation élastique décrite par le tenseur gradient de déformation élastique $\mathbf{F}^e$, l'élément de référence $\Delta\mathbf{X}$ est transformé en $\Delta\mathbf{x} = \mathbf{F}^e\Delta\mathbf{X}$. Le rayon diffracté 4 initialement dans la direction **p** est redirigé vers le point P", tel que

$$\mathbf{p}'' = \alpha\mathbf{F}^e\Delta\mathbf{X}$$

où comme précédemment le vecteur SP" est noté **p"**. La droite SP" intersecte le détecteur 10 au point P'. Le déplacement apparent **u** sur le détecteur 10 est **u = p'- p** (c'est-à-dire le vecteur PP') selon les équations suivantes :

$$\mathbf{u} = \mathbf{p}' - \mathbf{p}'' = \frac{p_z}{p_z''}\mathbf{p}'' - \mathbf{p} = \frac{z^*}{\alpha(\mathbf{F}^e\Delta\mathbf{X})_z}\alpha\mathbf{F}^e\Delta\mathbf{X} - \mathbf{p}$$

$$= \frac{z^*}{(\mathbf{F}^e\mathbf{p})_z}\mathbf{F}^e\mathbf{p} - \mathbf{p} = \frac{z^*}{(\hat{\mathbf{F}}^e\mathbf{p})_z}\hat{\mathbf{F}}^e\mathbf{p} - \mathbf{p}$$

Une fonction de déplacement, donnant le champ de déplacement $(u_x,u_y)$ pour déplacer (ou « advecter » ou apparier) les pixels de la première image f aux pixels d'une image déformée g, en fonction :

- des deux coordonnées $(x,y)$,
- des deux coordonnées prédéterminées $x^*$, $y^*$ du centre O, correspondant à la projection normale, dans le plan 110 d'image du détecteur 10, du point source S du faisceau diffracté dans le matériau, et
- de composantes $\hat{F}_1^e, \hat{F}_2^e, \hat{F}_3^e, \hat{F}_4^e, \hat{F}_5^e, \hat{F}_6^e, \hat{F}_7^e, \hat{F}_8^e$ du tenseur $\hat{\mathbf{F}}^e$ gradient de déformation élastique,

est préenregistrée dans une mémoire de l'unité 12.

Bien entendu, l'expression « chacun des pixels » ou « les pixels » peut être remplacée par « des pixels » pour désigner une partie des pixels de l'image.

Suivant un mode de réalisation de l'invention, le champ $(u_x, u_y)$ de déplacement est égal à, selon les équations (9) ci-dessous :

$$u_x(x,y) = \frac{z^*(\hat{F}_1^e(x-x^*) + \hat{F}_2^e(y-y^*) + \hat{F}_3^e z^*)}{\hat{F}_7^e(x-x^*) + \hat{F}_8^e(y-y^*) + z^*} - (x-x^*)$$

$$u_y(x,y) = \frac{z^*(\hat{F}_4^e(x-x^*) + \hat{F}_5^e(y-y^*) + \hat{F}_6^e z^*)}{\hat{F}_7^e(x-x^*) + \hat{F}_8^e(y-y^*) + z^*} - (y-y^*)$$

Le champ de déplacement $(u_x, u_y)$ entre la première image f de diffraction, appelée image de référence, et la deuxième image g de diffraction, appelée image déformée, reflète la déformation élastique de la maille cristalline du matériau CR au point étudié.

On décrit ci-dessous un algorithme pour calculer le tenseur $\hat{\mathbf{F}}^e$ gradient de déformation élastique. Cet algorithme peut être par exemple itératif sur les étapes E7, E8, E9, E10 et E11 décrites ci-dessous, ainsi que représenté à la figure 4.

Le procédé de traitement d'images est exécuté par l'unité 12 de calcul automatique, telle que par exemple un ou plusieurs calculateur(s) et/ou un ou plusieurs ordinateur(s), et/ou un ou plusieurs processeur(s) et/ou un ou plusieurs serveur(s) et/ou une ou plusieurs machine(s), pouvant être programmées à l'avance par un programme informatique préenregistré.

Au cours de la première étape E6 de calcul, on fait prendre au tenseur $\hat{\mathbf{F}}^e$ gradient de déformation élastique courant une valeur déterminée $\hat{\mathbf{F}}^e$ du tenseur gradient de déformation élastique, comme par exemple une valeur initiale **INIT** avant la première itération. Suivant un mode de réalisation de l'invention, cette valeur initiale **INIT** avant la première itération peut être par exemple le tenseur identité.

Au cours d'une deuxième étape E7 de calcul, postérieure à l'étape E6, on calcule le champ $(u_x, u_y)$ de déplacement courant en appliquant la fonction de déplacement dépendant du tenseur $\hat{\mathbf{F}}^e$ gradient de déformation élastique courant aux deux coordonnées *x,y* pour chacun des pixels de la première image *f*. On calcule ainsi le champ de déplacement courant induit par le tenseur gradient de déformation élastique courant aux coordonnées de pixels de la première image.

Au cours d'une troisième étape E8 de calcul, postérieure à l'étape E7, on calcule des troisièmes valeurs numériques d'une image déformée $\tilde{g}_u(\mathbf{x})=g(\mathbf{x}+\mathbf{u}(\mathbf{x}))$ en appliquant ou interpolant la deuxième image *g* aux deux coordonnées des pixels auxquelles a été additionné le champ de déplacement $(u_x, u_y)$ courant, où **x** désigne les deux coordonnées *x,y* des pixels. Le champ de déplacement courant $(u_x, u_y)$ est ainsi calculé en fonction du tenseur $\hat{\mathbf{F}}^e$ gradient de déformation élastique courant et des coordonnées pour chacun des pixels de la première image au cours de la deuxième étape E8 de calcul.

Suivant un mode de réalisation de l'invention, on calcule une fonction coût *A* (voir ci-dessous), à partir des différences quadratiques, pour la majeure partie ou l'ensemble des pixels, entre les troisièmes valeurs numériques de pixel de l'image déformée $\tilde{g}_u(\mathbf{x}) = g(\mathbf{x}+\mathbf{u}(\mathbf{x}))$ , ayant été calculées, et les premières valeurs numériques f(**x**) de pixels de la première image *f*,

on calcule le tenseur $\hat{\mathbf{F}}^e$ gradient de déformation élastique courant minimisant la fonction coût *A*, calculée à partir des différences, pour la majeure partie ou l'ensemble des pixels, entre les troisièmes valeurs numériques de pixel de l'image déformée $\tilde{g}_u(\mathbf{x})= g(\mathbf{x}+\mathbf{u}(\mathbf{x}))$ , ayant été calculées, et les premières valeurs numériques *f*(**x**) de pixels de la première image *f*.

Au cours de l'algorithme itératif, on effectue des itérations des première, deuxième et troisième étapes E7, E8, E9, E10, E11 de calcul en modifiant à chaque itération les valeurs déterminées de tenseur $\hat{\mathbf{F}}^e$ (appelées valeurs déterminées de tenseur modifiées $\hat{\mathbf{F}}^e$), jusqu'à remplir un critère de convergence sur cette valeur déterminée $\hat{\mathbf{F}}^e$ du tenseur gradient de déformation élastique, autrement dit jusqu'à remplir un critère de convergence sur la correction à la valeur courante de $\hat{\mathbf{F}}^e$ . On calcule lors de l'étape E7 par la fonction de déplacement le champ de déplacement $(u_x, u_y)$ qui correspond à ces valeurs déterminées de tenseur $\hat{\mathbf{F}}^e$.

Dans l'état de la technique, la corrélation d'images numériques globale consiste à corréler les deux images *f* et *g*. Suivant un mode de réalisation de l'invention, le procédé met en œuvre une corrélation d'images numériques intégrée (en abrégé CINI). Dans le cas d'une diffraction électronique, le procédé suivant l'invention peut être dénommé en abrégé ADDICTED pour Alternative Dedicated Digital Image Correlation Tailored to Electronic Diffraction, soit en français corrélation d'images numériques alternative, dédiée et adaptée à la diffraction électronique.

Suivant un mode de réalisation de l'invention, la recherche du champ de déplacement $(u_x, u_y)$ est réalisée en corrigeant l'image déformée *g* par le champ de déplacement $\tilde{g}_u(\mathbf{x})= g(\mathbf{x} +\mathbf{u}(\mathbf{x}))$ lors de l'étape E8, de façon à s'approcher le plus possible de l'image de référence $\tilde{g}_u(\mathbf{x})=f(\mathbf{x})$ , ce qui revient à minimiser la norme quadratique du résidu $r =(f(\mathbf{x}) - \tilde{g}_u(\mathbf{x}))$ sommé sur la région d'intérêt entière (ou fonction coût *A),* pouvant être les images entières *f* et *g*. Dans ce qui suit, l'image déformée *g*, ayant été corrigée par le champ de déplacement $\tilde{g}_u(\mathbf{x}) =g(\mathbf{x}+\mathbf{u}(\mathbf{x}))$ lors de l'étape E8 est appelée image déformée corrigée $\tilde{g}_u$.

Le procédé de traitement d'images suivant l'invention peut donc être un procédé de correction de la ou des deuxième(s) image(s) *g* et le dispositif de traitement d'images suivant l'invention peut donc être un dispositif de correction de la ou des deuxième(s) image(s) *g*.

La fonction coût A à minimiser s'écrit selon l'équation suivante :

$$A = \sum_{ROI} \left(f(\mathbf{x}) - \tilde{g}_u(\mathbf{x})\right)^2$$

où $\tilde{g}_u(\mathbf{x}) =g(\mathbf{x} +\mathbf{u}(\mathbf{x}))$ est l'image $\tilde{g}_u$ déformée, corrigée du champ de déplacement $(u_x,u_y)$ (au cours de l'algorithme de résolution numérique, il s'agira de la détermination courante) et la minimisation de cette fonction coût *A* conduira à des corrections successives de cette détermination jusqu'à convergence.

Suivant un mode de réalisation de l'invention, les champs $(u_x,u_y)$ de déplacement (ou leurs corrections) sont recherchés comme des combinaisons linéaires (ou affines) de champs constituant une « base cinématique ». Ils sont susceptibles d'avoir un support quelconque et nécessitent alors un traitement global de l'ensemble de la cinématique. Si de plus la dite base cinématique est issue d'un modèle physique, et donc restreinte à des mécanismes bien identifiés ayant une signature en champ de déplacement, alors elle sera dite "intégrée". La corrélation d'images numériques qui en résulte est alors également qualifiée d'intégrée.

Dans le cas de la méthode ADDICTED, la CINI est l'outil choisi pour analyser les figures de diffraction (*f* et *g* sont les figures de diffraction respectives du matériau CR cristallin ou polycristallin de référence (libre de contrainte pour l'image *f*) et du cristal observé (pour l'image *g*). Suivant un mode de réalisation de l'invention, on explicite la manière dont le champ de déplacement $(u_x,u_y)$ observé dans la figure de diffraction dépend ici de la déformation élastique du matériau CR diffractant $\hat{\mathbf{F}}^e$. Enfin, d'autres paramètres, **P**, peuvent influer sur le champ de déplacement $(u_x,u_y)$ mesuré, par exemple des paramètres **P** de projection, comme l'inclinaison de l'éprouvette par rapport au capteur 10, la taille physique d'un pixel et le pas de balayage du microscope électronique à balayage, ces deux derniers étant résumés par le terme de décalage induit par le faisceau (en anglais : beam-induced shift).

Suivant un mode de réalisation de l'invention, on explicite le champ de déplacement $(u_x,u_y)$ selon l'équation suivante :

$$\mathbf{u} = \mathbf{u}(\mathbf{x}; \hat{\mathbf{F}}^e, \mathbf{P})$$

Enfin, génériquement, ces champs peuvent avoir une dépendance non linéaire en $\hat{\mathbf{F}}^e$ ou **P.** Suivant un mode de réalisation de l'invention, on développe ces dépendances autour de la détermination courante des paramètres pour accéder à une expression affine adaptée aux approches CINI. Ainsi, suivant un mode de réalisation de l'invention, on écrit selon les équations suivantes :

$$\mathbf{u} = \mathbf{u}(x; \hat{\mathbf{F}}^e + \delta\hat{\mathbf{F}}^e, \mathbf{P} + \delta\mathbf{P}) = \mathbf{u}(x; \hat{\mathbf{F}}^e, \mathbf{P}) + \mathbf{\Phi}_i(x; \hat{\mathbf{F}}^e, \mathbf{P})\delta\hat{F}_i^e + \mathbf{\Psi}_j(x; \hat{\mathbf{F}}^e, \mathbf{P})\delta P_j$$

$$\mathbf{\Phi}_i = \frac{\partial \mathbf{u}}{\partial \hat{F}_i^e}$$

$$\mathbf{\Psi}_i = \frac{\partial \mathbf{u}}{\partial P_i}$$

où $\Phi_i$ correspond au champ de sensibilité par rapport à la composante $\hat{F}_i^e$ (pour *i* allant par exemple de 1 à 8) du tenseur

gradient $\hat{\mathbf{F}}^e$ de déformation, et $\Psi_j$ est le champ de sensibilité par rapport au paramètre $P_i$. Ainsi, par exemple, $\Phi$ est une matrice de taille $(2N_{pixel}) \times 8$.

Suivant un mode de réalisation de l'invention, le champ de sensibilité $\Phi_i(\mathbf{x};\{\hat{F}^e\})$ du champ u(x) de déplacement a comme composantes les composantes $\Phi_{xi}(\mathbf{x};\hat{\mathbf{F}}^e)$ et $\Phi_{yi}(\mathbf{x};\hat{\mathbf{F}}^e)$ selon les équations suivantes :

$$\Phi_{x1} = \frac{z^*(x-x^*)}{\hat{F}_7^e(x-x^*)+\hat{F}_8^e(y-y^*)+z^*}$$

$$\Phi_{x2} = \frac{z^*(y-y^*)}{\hat{F}_7^e(x-x^*)+\hat{F}_8^e(y-y^*)+z^*}$$

$$\Phi_{x3} = \frac{(z^*)^2}{\hat{F}_7^e(x-x^*)+\hat{F}_8^e(y-y^*)+z^*}$$

$$\Phi_{x4} = 0$$

$$\Phi_{x5} = 0$$

$$\Phi_{x6} = 0$$

$$\Phi_{x7} = -\frac{z^*(x-x^*)(\hat{F}_1^e(x-x^*)+\hat{F}_2^e(y-y^*)+\hat{F}_3^e z^*)}{\left(\hat{F}_7^e(x-x^*)+\hat{F}_8^e(y-y^*)+z^*\right)^2}$$

$$\Phi_{x8} = -\frac{z^*(y-y^*)(\hat{F}_1^e(x-x^*)+\hat{F}_2^e(y-y^*)+\hat{F}_3^e z^*)}{\left(\hat{F}_7^e(x-x^*)+\hat{F}_8^e(y-y^*)+z^*\right)^2}$$

$$\Phi_{y1} = 0$$

$$\Phi_{y2} = 0$$

$$\Phi_{y3} = 0$$

$$\Phi_{y4} = \frac{z^*(x-x^*)}{\hat{F}_7^e(x-x^*)+\hat{F}_8^e(y-y^*)+z^*}$$

$$\Phi_{y5} = \frac{z^*(y-y^*)}{\hat{F}_7^e(x-x^*)+\hat{F}_8^e(y-y^*)+z^*}$$

$$\Phi_{y6} = \frac{(z^*)^2}{\hat{F}_7^e(x-x^*)+\hat{F}_8^e(y-y^*)+z^*}$$

$$\Phi_{y7} = -\frac{z^*(x-x^*)(\hat{F}_4^e(x-x^*)+\hat{F}_5^e(y-y^*)+\hat{F}_6^e z^*)}{\left(\hat{F}_7^e(x-x^*)+\hat{F}_8^e(y-y^*)+z^*\right)^2}$$

$$\Phi_{y8} = -\frac{z^*(y-y^*)(\hat{F}_4^e(x-x^*)+\hat{F}_5^e(y-y^*)+\hat{F}_6^e z^*)}{\left(\hat{F}_7^e(x-x^*)+\hat{F}_8^e(y-y^*)+z^*\right)^2}$$

Suivant un mode de réalisation de l'invention, l'algorithme itératif est de type Gauss-Newton. On cherche, par exemple, à minimiser la fonction coût *A* de façon itérative par un algorithme de Gauss-Newton.

Suivant un mode de réalisation de l'invention, au cours de l'étape E8 postérieure à l'étape E7, on calcule $\tilde{g}^{(n)}(\mathbf{x}, \tilde{\mathbf{F}}^e, P) = \tilde{g}_u(\mathbf{x}) = g(\mathbf{x}+\mathrm{u}(\mathbf{x}, \tilde{\mathbf{F}}^e, P))$, qui est la troisième valeur numérique de pixel de l'image déformée corrigée.

Suivant un mode de réalisation de l'invention, au cours de l'étape E8 postérieure à l'étape E7, on calcule $\tilde{\mathrm{g}}^{(n)}(\mathbf{x}, \hat{\mathbf{F}}^e) = \tilde{g}_u(\mathbf{x}) = \mathrm{g}(\mathbf{x}+u(\mathbf{x}, \tilde{\mathbf{F}}^e))$, qui est la troisième valeur numérique de pixel de l'image déformée corrigée.

Suivant un mode de réalisation de l'invention, au cours de l'algorithme itératif, au cours de l'étape E10 postérieure à l'étape E9, on calcule un vecteur $\{\delta\hat{F}^e\}$ de correction vérifiant l'équation suivante :

$$[\mathbf{M}]\{\delta\hat{F}^e\} = \{\boldsymbol{\gamma}\}$$

où **[M]** est une matrice hessienne de dimension 8 × 8. Suivant un mode de réalisation de l'invention, au cours de l'étape E9 postérieure à l'étape E8, on calcule les coefficients $M_{ij}^{(n-1)}$ de la matrice hessienne **[M]** selon l'équation suivante :

$$M_{ij}^{(n-1)} = \sum_{ROI} \left(\nabla f(\mathbf{x}) \cdot \mathbf{\Phi}_i\left(\mathbf{x}, \{\hat{F}^e\}\right)\right)\left(\nabla f(\mathbf{x}) \cdot \mathbf{\Phi}_j\left(\mathbf{x}, \{\hat{F}^e\}\right)\right)$$

où f est les valeurs de pixels de l'image de référence, **x** représente les deux coordonnées x et y des pixels. $\Phi_i(\mathbf{x};\{\hat{F}^e\})$ est le champ de sensibilité du champ de déplacement $(u_x,u_y)$ par rapport à la composante $\hat{F}_i^e$ du tenseur $\hat{\mathbf{F}}^e$ gradient de déformation élastique et est égale à la dérivée partielle du champ $(u_x,u_y)$ de déplacement par rapport à chaque composante $\hat{F}_i^e$ du tenseur $\hat{\mathbf{F}}^e$ gradient de déformation élastique. Le champ de sensibilité $\Phi_i(\mathbf{x};\{\hat{F}^e\})$ est donc un vecteur à deux dimensions, qui a une composante en *x*, égale à $\Phi_{xi}(\mathbf{x};\hat{\mathbf{F}}^e)$ et une composante en *y*, égale à $\Phi_{yi}(\mathbf{x};\hat{\mathbf{F}}^e)$.

$\{\gamma\}$ est le second membre de la méthode de Newton-Raphson et est le vecteur de résidus ayant comme composantes

$$\gamma_i^{(n)} = \sum_{ROI} \left( f(\mathbf{x}) - \tilde{g}^{(n)}\left(\mathbf{x}, \left\{\hat{F}^e\right\}\right) \right) \nabla f(\mathbf{x}) \cdot \mathbf{\Phi}_i\left(\mathbf{x}, \left\{\hat{F}^e\right\}\right)$$

$\nabla f(\mathbf{x})$ est le gradient de $f(\mathbf{x})$, c'est-à-dire de $f(x,y)$.

Suivant un mode de réalisation de l'invention, au cours de l'étape E9 postérieure à l'étape E8, on calcule les coefficients $\gamma_i^{(n)}$ du second membre {y} selon l'équation suivante :

$$\gamma_i^{(n)} = \sum_{ROI} \left( f(\mathbf{x}) - \tilde{g}^{(n)}\left(\mathbf{x}, \left\{\hat{F}^e\right\}\right) \right) \nabla f(\mathbf{x}) \cdot \mathbf{\Phi}_i\left(\mathbf{x}, \left\{\hat{F}^e\right\}\right)$$

Suivant un mode de réalisation de l'invention, le critère de convergence sur la valeur déterminée $\hat{\mathbf{F}}^e$ de tenseur étant que la norme du vecteur $\{\delta\hat{F}^e\}$ de correction ayant été calculé est inférieure à la borne positive prescrite $\delta_\varepsilon$, non nulle.

Suivant un mode de réalisation de l'invention, lors de l'étape E11 postérieure à l'étape E10, on examine après chaque itération des étapes E7, E8, E9 et E10, si la norme du vecteur $\{\delta\hat{F}^e\}$ de correction est inférieure à une borne positive prescrite $\delta_\varepsilon$, non nulle. Par exemple, la borne $\delta_\varepsilon$ peut être égale à $10^{-7}$ ou autres. Dans le cas où la norme du vecteur $\{\delta\hat{F}^e\}$ de correction ayant été calculé n'est pas inférieure à la borne positive prescrite $\delta_\varepsilon$ (cas NON de la figure 4), on exécute l'étape E12 de mise à jour décrite ci-dessous.

Suivant un mode de réalisation de l'invention, au cours de l'étape E12 de calcul, on fait prendre au tenseur $\hat{\mathbf{F}}^e$ gradient de déformation élastique courant une valeur déterminée $\{\hat{F}^e\}$ de tenseur. Par exemple, lors de l'étape E12 de calcul de mise à jour, la valeur déterminée $\{\hat{F}^e\}$ de tenseur est incrémentée du vecteur $\{\delta\hat{F}^e\}$ de correction, selon l'équation de mise à jour de la valeur déterminée $\{\hat{F}^e\}$, suivante :

$$\left\{\hat{F}^e\right\} = \left\{\hat{F}^e\right\} + \left\{\delta\hat{F}^e\right\}$$

L'étape E12 est suivie de la première étape E7 de calcul de l'itération suivante.

Suivant un mode de réalisation de l'invention, dans le cas où la norme du vecteur $\{\delta\hat{F}^e\}$ de correction ayant été calculé est inférieure à la borne positive prescrite $\delta_\varepsilon$ (cas OUI de la figure 4), on exécute l'étape E13 décrite ci-dessous.

Suivant un mode de réalisation de l'invention, lors de l'étape E13, on retient les valeurs déterminées du tenseur $\hat{\mathbf{F}}^e$ gradient de déformation élastique calculées au cours de l'étape E12 de la dernière itération, qui est celle vérifiant le critère de convergence, et le champ de déplacement $(u_x,u_y)$ calculé au cours de la dernière étape E7, qui est calculé par le champ de déplacement $(u_x,u_y)$ qui correspond à ces valeurs déterminées de tenseur $\hat{\mathbf{F}}^e$, ayant été retenues.

Suivant un mode de réalisation de l'invention, lors de l'étape E13, l'on fournit sur une sortie (pouvant être par exemple un affichage sur un écran, et/ou un enregistrement dans une mémoire, et/ou l'envoi sur un port de sortie ou autres) un ou plusieurs parmi :

- le champ de déplacement $(u_x,u_y)$ correspondant, calculé comme remplissant le critère de convergence sur la valeur déterminée $\hat{\mathbf{F}}^e$ du tenseur gradient de déformation élastique,
- le tenseur $\hat{\mathbf{F}}^e$ gradient de déformation élastique, calculé comme remplissant le critère de convergence,
- l'image corrigée ou image déformée corrigée $\tilde{g}_u$ , correspondant à l'image déformée g, ayant été corrigée par le champ de déplacement $(u_x,u_y)$ correspondant, calculé lors de l'étape E8 comme remplissant le critère de convergence sur la valeur déterminée $\hat{\mathbf{F}}^e$ du tenseur gradient de déformation élastique, c'est-à-dire les troisièmes valeurs numériques de pixel ayant été calculées à partir du champ de déplacement $(u_x,u_y)$ correspondant, calculé comme remplissant le critère de convergence sur la valeur déterminée $\hat{\mathbf{F}}^e$ du tenseur gradient de déformation élastique,
- un champ de résidu r, calculé comme étant la différence entre d'une part les troisièmes valeurs numériques de pixels de l'image déformée corrigée $\tilde{g}_u$ , ayant été calculées pour le champ de déplacement $(u_x,u_y)$ correspondant comme remplissant le critère de convergence sur la valeur déterminée $\hat{\mathbf{F}}^e$ du tenseur gradient de déformation élastique, et d'autre part les premières valeurs numériques $f(x,y)$ de pixels de l'image de référence $f$,
- une moyenne quadratique des résidus *r* calculés pour respectivement plusieurs deuxièmes images *g*.

Suivant un mode de réalisation de l'invention, le procédé est exécuté pour la majeure partie (par exemple au moins 50 %, au moins 60%, au moins 70%, au moins 80% ou au moins 90% des pixels de la première image *f* et de la deuxième image g) ou l'ensemble des pixels de la première image *f* et de la deuxième image g, et ce en une seule fois pour chaque image.

Suivant un mode de réalisation de l'invention, le procédé est exécuté pour plusieurs deuxièmes images *g*.

Le champ de résidu *r* collecte tous les artéfacts de la formation et l'acquisition des images, et ainsi contient potentiellement des informations très riches des images analysées. Les signaux dans le résidu qui ne sont pas un bruit blanc indiquent souvent une exploitation incomplète de l'information ou un modèle de transformation cinématique entre images non adapté. Le résidu peut donc contenir un signal mais aussi des bruits blancs. Si l'on suppose que l'image de référence *f* est formée à partir d'une image de référence parfaite $f_p$ sans bruit, superposée à un bruit $b_f$ supposé de distribution normale, sans corrélation spatiale, et bien connu sous le terme de « bruit blanc gaussien » : alors l'image *f* est égale à, selon l'équation suivante :

$$f = f_p + b_f$$

Suivant un mode de réalisation de l'invention, pour une série $g^i$ d'images g de diffraction déformées, chaque image $g^i$ est égale à, selon l'équation suivante :

$$g^i = g_p^i + b_g^i$$

où $b_g^i$ est le bruit pur.

Après l'application du procédé suivant l'invention, on a, selon l'équation suivante :

$$\tilde{g}^i = \tilde{g}_p^i + \tilde{b}_g^i$$

Le résidu est alors, lorsque l'image de référence et l'image déformée correspondent parfaitement après le recalage (dans ce cas $f_p = \tilde{g}_p^i$ ), selon les équations suivantes :

$$r^i = f - \tilde{g}^i = f_p - \tilde{g}_p^i + b_f - \tilde{b}_g^i = b_f - \tilde{b}_g^i$$

Suivant un mode de réalisation de l'invention, la même image de référence est utilisée au sein d'un même grain, ce qui correspond donc à une seule image *f*, mais une multitude d'images *g*. On observe alors que les résidus à convergence obtenus pour l'ensemble des images *g*, peuvent être moyennés et, en notant ⟨...⟩ cette moyenne sur les différents points de mesure au sein d'un grain, la moyenne des résidus r est égale à, selon les équations suivantes :

$$\langle r^i \rangle = b_f - \langle \tilde{b}_g^i \rangle = b_f$$

Ainsi, suivant un mode de réalisation de l'invention, la moyenne des résidus *r* fournit une estimation du bruit $b_f$, et on soustrait de l'image de référence $f_p$ le bruit $b_f$ ainsi calculé. Ceci permet de diminuer les incertitudes de mesure par la diminution du résidu (variance divisée par deux).

Suivant un mode de réalisation de l'invention, lors de l'étape E5 précédant l'étape E6, on filtre les valeurs de pixels $f(x,y)$ de la première image *f* et les valeurs de pixels $g(x,y)$ de la deuxième image *g* par un filtre gaussien. Un lissage gaussien à très petite échelle de l'image de diffraction facilite beaucoup le calcul ultérieur, car l'image brute est corrompue par un bruit blanc très important. Ce lissage gaussien consiste à convoluer l'image initiale *f* (et éventuellement *g*) par une fonction émolliente, G

$$\tilde{f} = f * G$$

où $G(x,y)$ est choisie comme une gaussienne, dépendant d'une longueur interne $\xi$, et qui s'écrit :

$$G(x,y) = \frac{1}{2\pi\xi^2} e^{-\frac{x^2+y^2}{2\xi^2}}$$

En pratique, la longueur $\xi$ choisie peut être de 1 à 2 pixels. Ce choix dépend du niveau de bruit sur l'image, lui-même fonction du temps d'acquisition, du nombre de pixels, des paramètres du faisceau, du matériau imagé. Le lissage gaussien élimine de façon efficace le bruit haute fréquence de l'image de diffraction.

Suivant un mode de réalisation de l'invention, lors de l'étape E4 précédant l'étape E5, on filtre les valeurs de pixels $f(x,y)$ de la première image $f$ et les valeurs de pixels $g$(x,y) de la deuxième image $g$ par un filtrage de valeurs de pixels surexposés en les remplaçant par une moyenne de pixels voisins de ceux-ci. Dans le cas de la non-uniformité de l'écran phosphorescent 110 utilisé pour capter les électrons, les images acquises $f$, g possèdent souvent en des points fixes des pixels surexposés. Ces pixels très brillants sont néfastes au calcul de corrélation d'images et il est recommandé de remplacer la valeur de niveau de gris de ces "mauvais pixels" par le niveau de gris moyen des voisins.

Suivant un mode de réalisation de l'invention, lors de l'étape E4 précédant l'étape E5, on filtre les valeurs de pixels $f(x,y)$ de la première image $f$ et les valeurs de pixels $g(x,y)$ de la deuxième image $g$ par un filtrage de ces valeurs de pixels par soustraction de tendances globales de niveaux de gris, représentées par un polynôme d'ordre 2 ou 3 obtenu par un processus de régression. En effet, les images $f$ et $g$ peuvent présenter des variations globales de niveaux de gris liées à des fluctuations de l'énergie moyenne diffractée. Pour la corrélation d'images globale, il est préférable dans ce cas de soustraire les tendances globales de niveaux de gris.

Suivant un mode de réalisation de l'invention, lors de l'étape E3 précédant l'étape E4, on soustrait aux valeurs de pixels $f(x,y)$ de la première image $f$ et aux valeurs de pixels $g(x,y)$ de la deuxième image g un fond d'image, ayant été calculé. En effet, les images acquises $f$ et g peuvent être entachées d'un fond dû en particulier à la distribution d'énergie des électrons diffractés. Cette correction par soustraction du fond élimine les variations d'intensité moyennes de l'image, ce qui permet ensuite d'augmenter le contraste et de rendre les bandes de Kikuchi plus nettes. Par exemple, afin d'y parvenir, on réalise une acquisition à faible grandissement du matériau CR cristallin ou polycristallin, afin de scanner un grand nombre de grains d'orientations différentes. Les images de diffraction ainsi acquises sont moyennées et une estimation du fond peut être obtenue. En principe, l'image de fond est unique pour toute la zone étudiée d'une acquisition HR-EBSD.

Bien entendu, dans d'autres modes de réalisation de l'invention, l'ordre des étapes E3, E4 et E5 pourrait être modifié ou l'une ou plusieurs de ces étapes E3, E4 et E5 pourrait être supprimée(s). L'étape E2 peut être précédée d'une étape E1 d'entrée pour entrer des images de Kikuchi, le centre O et les paramètres **P**. L'étape E13 peut être suivie d'une étape de post-traitement, par exemple pour obtenir d'autres grandeurs calculées à partir des grandeurs obtenues à l'étape E13, comme par exemple une composante de déformation $\varepsilon_{yy}$ suivant la direction $y$, ou autres.

Suivant un mode de réalisation de l'invention, le dispositif 1 de traitement d'images d'un matériau cristallin ou polycristallin suivant l'invention, comporte des moyens pour la mise en œuvre du dispositif 1 de traitement d'image suivant l'invention. Le dispositif 1 de traitement d'images suivant l'invention comporte le détecteur 10 à diffraction permettant d'acquérir :

- une première image $f$ du matériau se trouvant dans un état de référence, donnant des premières valeurs numériques $f(x,y)$ de pixels en fonction de deux coordonnées $(x,y)$ de pixels,
- une ou plusieurs deuxième image $g$ du matériau se trouvant dans un état déformé par rapport à l'état de référence, la deuxième image donnant des deuxièmes valeurs numériques $g(x,y)$ de pixels en fonction des coordonnées $(x, y)$ des pixels.

Le dispositif 1 de traitement d'images comporte au moins un calculateur 12, comportant au moins une mémoire, dans laquelle est enregistrée un champ $(u_x,u_y)$ de déplacement, pour faire passer les pixels de la première image aux pixels d'une image déformée, en fonction :

- des deux coordonnées $(x,y)$ des pixels,
- de coordonnées prédéterminées $(x^*, y^*)$ du centre O, correspondant à la projection normale, dans le plan d'image du détecteur, du point source S du faisceau diffracté dans le matériau, et

- des composantes $\hat{F}_1^e, \hat{F}_2^e, \hat{F}_3^e, \hat{F}_4^e, \hat{F}_5^e, \hat{F}_6^e, \hat{F}_7^e, \hat{F}_8^e$ ) du tenseur $\hat{\mathbf{F}}^e$ gradient de déformation élastique.

Le calculateur 12 est configuré pour :

au cours d'une première étape de calcul E6 ou E12, faire prendre au tenseur $\hat{\mathbf{F}}^e$ gradient de déformation élastique courant une valeur déterminée $\{\hat{\mathbf{F}}^e\}$,
au cours d'une deuxième étape E7 de calcul, calculer le champ $(u_x, u_y)$ de déplacement courant correspondant au tenseur $\{\hat{F}^e\}$ gradient de déformation élastique courant et aux coordonnées $x,y$ de pixels de la première image $f$,
au cours d'une troisième étape E8 de calcul, calculer des troisièmes valeurs numériques de pixel d'une image déformée $\tilde{g}_u(\mathbf{x})=g(\mathbf{x}+\mathbf{u}(\mathbf{x}))$ en corrigeant la deuxième image g aux coordonnées de pixels du champ de déplacement $(u_x, u_y)$ courant,
au cours d'un algorithme itératif, effectuer des itérations des première, deuxième et troisième étapes de calcul E12, E7, E8 sur des valeurs déterminées de tenseur modifiées $\hat{\mathbf{F}}^e$, jusqu'à remplir un critère de convergence sur la valeur déterminée $\{\hat{F}^e\}$, pour calculer le champ de déplacement $(u_x, u_y)$ correspondant.

L'invention concerne également un programme d'ordinateur, comportant des instructions de code pour la mise en œuvre du procédé de traitement d'images d'un matériau cristallin ou polycristallin suivant l'invention, lorsqu'il est exécuté sur un calculateur. Le programme d'ordinateur est enregistré dans une mémoire du calculateur 12.
Suivant un mode de réalisation de l'invention, les première et deuxième images $f$ et g sont obtenues après correction d'une translation globale des images par interpolation des images, selon l'équation suivante des images corrigées $\hat{f}$ et $\hat{g}$ :

$$\hat{g}(\mathbf{x}) = g(\mathbf{x}+\mathbf{w})$$

$$\hat{f}(\mathbf{x}) = f(\mathbf{x}+\mathbf{w})$$

où **x** représente les deux coordonnées $x$ et $y$ des pixels des images. Cette translation **w** peut être obtenue sur la base d'un étalonnage du détecteur avec une éprouvette standard et d'une direction connue de balayage par rapport à l'écran 110 et la taille physique d'un pixel de l'écran 110. Ainsi, avant de lancer le calcul de corrélation intégrée, on peut corriger au préalable la dérive des images due au mouvement du point d'émission, c'est-à-dire le mouvement de balayage du faisceau d'électrons.
Suivant un mode de réalisation de l'invention, les première et deuxième images $f$ et g sont obtenues après correction par centrage au centre O de projection. Par exemple, l'éprouvette (matériau CR) peut être inclinée à 70° en position d'acquisition HR-EBSD et l'écran 110 peut également être désorienté de quelques degrés aussi. Si l'acquisition est réalisée sur une grande zone, la distance $z^*$ entre le point S d'émission et l'écran peut varier. La valeur de $z^*$ a un effet sur le grandissement de l'image de diffraction. Cet effet peut être corrigé en ajustant la taille de l'image de diffraction centrée au centre de projection O = $(x^*, y^*)^T$ avant de lancer la corrélation d'images, surtout lorsque la zone mesurée dépasse 100 µm, selon l'équation suivante des images corrigées $\check{f}$ et $\check{g}$ :

$$\check{g}(\mathbf{x}-\mathbf{x}^*) \equiv \hat{g}\ [(z_g^*/z_f^*)(\mathbf{x}-\mathbf{x}^*)]$$

$$\check{f}(\mathbf{x}-\mathbf{x}^*) \equiv \hat{f}\ [(z_g^*/z_f^*)(\mathbf{x}-\mathbf{x}^*)]$$

où $z_g^*$ est la distance entre le point d'émission d'image « déformée », et $z_f^*$ est celle entre le point d'émission d'image de référence. En conséquence, l'effet des paramètres **P** de projection sur le champ $\Psi_j$ de sensibilité peut être traité et corrigé au préalable et la résolution être effectué sur le tenseur $\hat{\mathbf{F}}^e$ .
On décrit ci-dessous à titre d'exemple non limitatif un essai sur une éprouvette de traction polycristalline, en référence aux figures 5A, 5B, 5C, 6A à 6I.
On a réalisé la première image $f$ à l'état de référence et la deuxième image g à l'état déformé d'une éprouvette. Pour réaliser l'état déformé, l'éprouvette d'acier inoxydable de grade AISI 316L à gros grains a été polie et soumise à un chargement de traction à l'intérieur de la chambre d'un microscope électronique à balayage à l'aide d'une platine d'essai in-situ. La direction de chargement est horizontale dans les figures 5A et 5B. Lors d'une première phase élastique du chargement, une acquisition HR-EBSD a été faite en considérant une zone d'intérêt focalisée sur un point triple de la microstructure, c'est-à-dire séparant trois grains G1, G2 et G3. L'algorithme suivant l'invention a été utilisé pour traiter les données.

La figure 5A montre dans une zone d'intérêt de l'éprouvette une image en électrons secondaires prise au microscope électronique à balayage. La figure 5B montre dans la zone d'intérêt de l'éprouvette de la figure 5A une figure de pôle inverse obtenue par analyse EBSD standard. La figure 6A montre l'image *f* de référence obtenue en un point de la zone d'intérêt, en fonction des coordonnées dans le plan du détecteur, *x* en abscisse et *y* en ordonnées. La figure 6B montre la deuxième image g de l'état déformé, en fonction des coordonnées *x* en abscisse et des coordonnées *y* en ordonnées. La figure 6C montre l'écart initial ECI entre l'image de la figure 6B et l'image de la figure 6A, en fonction des coordonnées *x* en abscisse et des coordonnées *y* en ordonnées. La figure 6D montre le tenseur $\hat{\mathbf{F}}^e$ gradient de déformation élastique, obtenu par la méthode ADDICTED suivant l'invention à partir des images *f* et *g* des figures 6A et 6B. La figure 6E montre selon l'échelle ECH de niveaux de gris représentée à droite la valeur numérique de la composante $u_x$ du champ de déplacement ayant été calculé à partir des images des figures 6A et 6B par la méthode ADDICTED suivant l'invention, en fonction des coordonnées *x* en abscisse et des coordonnées *y* en ordonnées. La figure 6F montre selon l'échelle ECH de niveaux de gris (valeurs numériques de pixels) représentée à droite la valeur numérique de l'autre composante $u_y$ du champ de déplacement ayant été calculé à partir des images des figures 6A et 6B par la méthode ADDICTED suivant l'invention, en fonction des coordonnées *x* en abscisse et des coordonnées *y* en ordonnées. La figure 6G montre l'image déformée et corrigée $\tilde{g}_u$, c'est-à-dire ayant été corrigée à partir de la figure 6B par le champ ($u_x$,$u_y$) de déplacement des figures 6E et 6F, ayant été calculé à partir des images des figures 6A et 6B par la méthode ADDICTED suivant l'invention, en fonction des coordonnées *x* en abscisse et des coordonnées *y* en ordonnées. La figure 6H montre le champ de résidu *r*, égal à l'écart entre l'image déformée corrigée $\tilde{g}_u$ de la figure 6G, obtenue par la méthode ADDICTED suivant l'invention, et l'image *f* de la figure 6A. La figure 6I montre une image de diffraction du grain G3, où les signaux contenus dans l'image 6H sont visibles.

Il existe une rotation peu perceptible à l'œil nu entre les deux images des figures 6A et 6B mais notable lorsque l'on calcule l'écart initial entre celles-ci, comme illustré à la figure 6C. On peut conclure des figures 6H et 6C que l'écart initial dominant illustré sur la figure 6C disparaît grâce à la méthode ADDICTED suivant l'invention à la figure 6H et qu'un champ de bandes "fantômes" devient visible dans les résidus de la figure 6H.

On observe que l'image de diffraction de la figure 6I présente une similitude des bandes Kikuchi avec les bandes "fantômes" présentes dans le résidu illustré sur la figure 6H. Ce phénomène indique que "l'image de fond" n'a pas été acquise de façon suffisamment précise et robuste et qu'en conséquence le signal de diffraction du grain G3 est encore contenu dans cette image. En interprétant le champ de résidu fourni à la figure 6H par la méthode ADDICTED suivant l'invention, il est possible de révéler des informations auparavant cachées et qui pourraient être utiles pour construire une meilleure image de fond.

Pour initialiser la toute première estimation $\{\hat{F}^e\}$ lors de l'étape E6 (la première image g de diffraction « déformée »), la matrice identité est un bon choix pour le tenseur $\hat{\mathbf{F}}^e$, du fait des faibles déformations attendues, et de l'absence d'informations supplémentaires. Pour initialiser lors de l'étape E6 le tenseur sur les autres pixels, il est généralement préférable de prendre la valeur de $\{\hat{F}^e\}$ ayant été calculée pour l'un de ses voisins, car le niveau de déformation est supposé être proche entre des points matériels voisins.

La vitesse de convergence en fonction des conditions de calcul est résumée dans le Tableau 1 ci-dessous :

Tableau 1 : **Nombre d'itérations pour différentes conditions de calcul**

| Lissage gaussien | Noyau de 2 pixels | Noyau de 1 pixel | Non lissé |
|---|---|---|---|
| Initialisé par tenseur $\hat{\mathbf{F}}^e$ = matrice identité | 17 | 65 | 700 |
| Initialisé par tenseur $\hat{\mathbf{F}}^e$ des pixels voisins | 14 | 50 | 300 |

On peut conclure que le lissage gaussien de l'image de diffraction réduit drastiquement le nombre d'itérations nécessaires pour converger et le lissage avec un noyau plus grand (2 pixels) rend la convergence plus rapide qu'avec un noyau plus petit (1 pixel). L'initialisation avec l'estimation du tenseur $\hat{\mathbf{F}}^e$ des pixels voisins accélère également la convergence surtout pour les calculs sur l'image de diffraction non filtrée par le lissage. En termes de valeurs du tenseur $\hat{\mathbf{F}}^e$ obtenues, différentes conditions de calcul ne conduisent pas à des valeurs du tenseur $\hat{\mathbf{F}}^e$ identiques mais assez proches. L'écart type des valeurs du tenseur $\hat{\mathbf{F}}^e$ obtenues est inférieur à $10^{-4}$.

Les calculs présentés ci-après ont été effectués à partir de l'image g du matériau sous contrainte de la figure 5A, cette image est lissée avec un noyau gaussien de 2 pixels et avec initialisation par la valeur du tenseur $\hat{\mathbf{F}}^e$ du pixel voisin. L'hypothèse de contrainte plane a été appliquée au tenseur $\hat{\mathbf{F}}^e$, qui a donc été transformé en (assimilé au) tenseur $\mathbf{F}^e$ (partie élastique $\mathbf{F}^e$ du tenseur gradient de déformation $\mathbf{F}$). La zone d'émission (interagissant avec le faisceau électronique) est de profondeur d'environ 25 nm, qui rend l'hypothèse de contraintes planes légitime. Il faut noter que cette hypothèse de contrainte plane repose sur l'hypothèse que la normale à la surface soit bien connue, ce qui n'est en général pas le cas après déformation. Un relief sur la surface va dégrader la précision des mesures HR-EBSD. L'acquisition HR-EBSD a été réalisée à l'entrée en plasticité et il est alors légitime de négliger l'effet du relief. On suppose ici que la rotation peut être grande, mais que la déformation pure est faible (régime élastique). Il convient alors de garder un formalisme de grandes transformations sur $\mathbf{F}^e$, et calculer la rotation **R** par une décomposition polaire, cc qui permet d'estimer le tenseur de déformation pure élastique de Green-Lagrange droit $\mathbf{U}^e$ lié aux contraintes selon l'équation suivante :

$$\mathbf{F}^e = \mathbf{R}\,\mathbf{U}^e$$

Concernant les déformations pures, une hypothèse de petites perturbations est légitime, $\|\mathbf{I}-\mathbf{U}^e\| \ll 1$, et donc, le tenseur de déformation de Green-Lagrange est approximativement égal au tenseur de déformation infinitésimale ε, selon l'équation suivante :

$$\mathbf{U}^e \cong \mathbf{I} + \boldsymbol{\varepsilon}$$

Dans le régime élastique, le tenseur σ des contraintes complet se calcule par la loi de Hooke, selon l'équation suivante :

$$\boldsymbol{\sigma} = J^{-1}\mathbf{F}^e C : \boldsymbol{\varepsilon}(\mathbf{F}^e)^T$$

où $J$ est le déterminant de $\mathbf{F}^e$. Les constantes élastiques sont: $C_{11}$ = 206 GPa, $C_{12}$ = 133 GPa, $C_{44}$ = 119 GPa, et sont adoptées pour le tenseur de Hooke C supposé cubique pour la méthode ADDICTED suivant l'invention.

Les composantes $\sigma_{xx}$, $\sigma_{yy}$, $\sigma_{xy}$, $\sigma_{yz}$ et $\sigma_{xz}$ du tenseur σ des contraintes obtenues par la méthode ADDICTED suivant l'invention sont représentées sur respectivement les figures 7A, 7B, 7C, 7D et 7E en fonction des coordonnées *x* en abscisse et des coordonnées *y* en ordonnées. La composante $\sigma_{zz}$ du tenseur σ de contrainte obtenue par la méthode ADDICTED suivant l'invention est trop faible pour être distinguée de 0 et n'est donc pas représentée.

Par ailleurs, pour vérifier l'hypothèse de contraintes planes, on doit s'approcher de ce que les contraintes de cisaillement sur la face libre $\sigma_{iz}$ soient nulles. Ces contraintes de cisaillement sont faibles avec la méthode ADDICTED suivant l'invention, qui s'approche ainsi d'un état de contrainte plane.

La contrainte équivalente de von Mises obtenue par la méthode ADDICTED suivant l'invention est représentée à la figure 8A selon l'échelle ECH de gris représentée à droite, en fonction des coordonnées *x* en abscisse et des coordonnées *y* en ordonnées. La figure 8B représente un histogramme de la contrainte équivalente de von Mises de la figure 8A. La valeur extrême de contrainte de von Mises, est de 2.7 GPa pour la méthode ADDICTED suivant l'invention. En termes de temps de calcul, l'exécution automatique du procédé suivant l'invention, pour une programmation codée en Matlab, prend 40 h sur un ordinateur portable en utilisant deux cœurs i7. Sur une machine de bureau en faisant tourner 8 cœurs i7, soit une machine plus puissante et plus rapide, le programme CrossCourt prend environ 40 h pour le premier calcul uniquement, et 100 h avec le recadrage (« remapping », précité). Le procédé suivant l'invention réduit ainsi drastiquement (de 75 % ou 90 %) le temps de calcul avec une programmation en langage interprété, qui utilise un code non compilé et non optimisé.

L'invention permet de mesurer les déformations et d'évaluer les contraintes précisément. L'invention présente les avantages suivants :

- Implémentation facile. L'opération de pré-rotation est incorporée intrinsèquement dans la résolution par la méthode ADDICTED suivant l'invention.
- Robustesse du calcul, car on mesure directement les 8 composantes du tenseur $\hat{\mathbf{F}}^e$ gradient de déformation, en intégrant la majeure partie ou la quasi-totalité de l'image de diffraction. Cet effet a été vérifié sur des images de Kikuchi dégradées. L'exploitation des images pour corrélation se fait de façon complète et n'introduit pas de corrélation spatiale entre points de calcul voisins. Le sens physique du résultat est donc amélioré.
- La stratégie de corrélation globale suivant l'invention permet également d'éviter une redondance dans les calculs effectués (là où la méthode d'inter-corrélation de l'état de l'art de la technique engendre des chevauchements des imagettes) et donc de gagner un temps de calcul considérable (de 75 % à 90 % selon le cas test).
- La stratégie de corrélation globale réduit l'incertitude de mesure, une réduction de 40% a été mise en évidence sur un cas test d'interprétation simple. La stratégie prend une région d'intérêt large et unique, c.-à-d. elle échantillonne en une seule fois un grand nombre de pixels. En évitant le biais d'échantillonnage intrinsèque à l'inter-corrélation, la méthode ADDICTED suivant l'invention est optimale vis-à-vis d'un bruit blanc gaussien affectant les images de diffraction.

- Dans des modes de réalisation, des améliorations ont été proposées, comme par exemple l'application d'un lissage gaussien sur la figure de diffraction pour atténuer le bruit haute fréquence, ou encore l'initialisation du calcul par les résultats d'éléments voisins.
- En cas de fortes déformations, la transformation des images est mal appréciée par la corrélation standard de l'état de l'art de la technique mais est bien décrite par la formulation suivant l'invention, basée sur l'équation de projection. Un gain en précision est donc obtenu, que l'on peut apprécier dans les résultats par la réduction des valeurs de contraintes extrêmes.
- Dans des modes de réalisation, le champ de résidus de corrélation est obtenu de façon intrinsèque par le procédé suivant l'invention, tandis qu'il n'est pas calculé par les techniques de l'état de l'art et est coûteux à calculer lorsque l'on veut l'obtenir par ces techniques, car il nécessiterait beaucoup d'interpolations. Dans des modes de réalisation, par l'analyse des résidus de tous les calculs, on peut « débruiter » toutes les images de Kikuchi, ou déceler les erreurs éventuelles existant dans le bruit de fond.
- Enfin, la méthode ADDICTED suivant l'invention, adaptée aux images HR-EBSD peut être étendue à d'autres types d'images obtenues par diffraction, par exemple la diffraction Kossel, la diffraction Laue ou la diffraction MET (microscope électronique à transmission). Ces techniques se basent sur le même principe de projection de faisceaux diffractés. La méthode ADDICTED suivant l'invention peut être portée sur ces techniques. La méthode ADDICTED suivant l'invention pour diffraction Laue et MET, avec tous les avantages explicités ci-dessus, apporte des gains significatifs sur leur exploitation.

Bien entendu, les modes de réalisation, caractéristiques et exemples ci-dessus peuvent être combinés l'un avec l'autre ou être sélectionnés indépendamment l'un de l'autre.

## Revendications

**1.** Procédé de traitement d'images, obtenues par un détecteur à diffraction, d'un matériau cristallin ou polycristallin, dans lequel on mesure par le détecteur :

- une première image ($f$) de diffraction du matériau se trouvant dans un état de référence, donnant des premières valeurs numériques ($f(x,y)$) de pixels en fonction de deux coordonnées ($x,y$) de pixels,
- au moins une deuxième image ($g$) de diffraction du matériau se trouvant dans un état déformé par rapport à l'état de référence, la deuxième image donnant des deuxièmes valeurs numériques ($g(x,y)$) de pixels en fonction des coordonnées ($x,y$) de pixels,

**caractérisé en ce que** dans un calculateur,
un champ ($u_x,u_y$) de déplacement, pour déplacer des pixels de la première image à des pixels d'une image déformée, en fonction :

- des deux coordonnées ($x,y$) des pixels,
- de coordonnées prédéterminées ($x^*$, $y^*$) d'un centre (O), correspondant à la projection normale, dans le plan d'image du détecteur, d'un point source (S) du faisceau diffracté dans le matériau, et
- de composantes $(\hat{F}_1^e, \hat{F}_2^e, \hat{F}_3^e, \hat{F}_4^e, \hat{F}_5^e, \hat{F}_6^e, \hat{F}_7^e, \hat{F}_8^e)$ d'un tenseur $\hat{\mathbf{F}}^e$ gradient de déformation élastique,

est préenregistré dans une mémoire,

au cours d'une première étape (E6, E12) de calcul, on fait prendre au tenseur $\hat{\mathbf{F}}^e$ gradient de déformation élastique une valeur déterminée ($\{\hat{F}^e\}$) du tenseur gradient de déformation élastique,
au cours d'une deuxième étape (E7) de calcul, on calcule le champ ($u_x,u_y$) de déplacement courant à partir du tenseur ($\hat{\mathbf{F}}^e$) gradient de déformation élastique courant et des coordonnées ($x,y$) de pixels de la première image ($f$),
au cours d'une troisième étape (E8), on calcule des troisièmes valeurs numériques de pixel d'une image déformée ($\tilde{g}_u(\mathbf{x})=g(\mathbf{x}+\mathbf{u}(\mathbf{x}))$) en corrigeant la deuxième image (g) aux coordonnées de pixels auxquelles a été additionné le champ de déplacement ($u_x,u_y$) courant,

au cours d'un algorithme itératif, on effectue des itérations des première, deuxième et troisième étapes (E12, E7, E8) de calcul sur des valeurs déterminées de tenseur modifiées ($\{\hat{F}^e\}$), jusqu'à remplir un critère de convergence sur la valeur déterminée ($\{\hat{F}^e\}$) du tenseur gradient de déformation élastique, pour calculer le champ de déplacement ($u_x, u_y$) correspondant.

**2.** Procédé de traitement d'images suivant la revendication 1, **caractérisé en ce que** le tenseur $\hat{\mathbf{F}}^e$ gradient de déformation élastique est égal à

$$[\hat{\mathbf{F}}^e] = \begin{bmatrix} \hat{F}_1^e & \hat{F}_2^e & \hat{F}_3^e \\ \hat{F}_4^e & \hat{F}_5^e & \hat{F}_6^e \\ \hat{F}_7^e & \hat{F}_8^e & 1 \end{bmatrix}$$

où $\hat{F}_1^e, \hat{F}_2^e, \hat{F}_3^e, \hat{F}_4^e, \hat{F}_5^e, \hat{F}_6^e, \hat{F}_7^e, \hat{F}_8^e$ sont les composantes du tenseur $\hat{\mathbf{F}}^e$ gradient de déformation élastique.

**3.** Procédé de traitement d'images suivant l'une quelconque des revendications précédentes, **caractérisé en ce que** le champ $u_x, u_y$ de déplacement, pour déplacer des pixels de la première image à des pixels d'une image déformée, en fonction :

- des deux coordonnées $x,y$ de pixels,
- des coordonnées prédéterminées $x^*, y^*, z^*$ du centre (O), correspondant à la projection normale, dans le plan d'image du détecteur, du point source (S) du faisceau diffracté dans le matériau, et
- des composantes $\hat{F}_1^e, \hat{F}_2^e, \hat{F}_3^e, \hat{F}_4^e, \hat{F}_5^e, \hat{F}_6^e, \hat{F}_7^e, \hat{F}_8^e$ du tenseur $\hat{\mathbf{F}}^e$ gradient de déformation élastique,

est égal à

$$u_x(x,y) = \frac{z^*(\hat{F}_1^e(x-x^*) + \hat{F}_2^e(y-y^*) + \hat{F}_3^e z^*)}{\hat{F}_7^e(x-x^*) + \hat{F}_8^e(y-y^*) + z^*} - (x-x^*)$$

$$u_y(x,y) = \frac{z^*(\hat{F}_4^e(x-x^*) + \hat{F}_5^e(y-y^*) + \hat{F}_6^e z^*)}{\hat{F}_7^e(x-x^*) + \hat{F}_8^e(y-y^*) + z^*} - (y-y^*)$$

**4.** Procédé de traitement d'images suivant l'une quelconque des revendications précédentes, **caractérisé en ce que** l'algorithme itératif est effectué par une méthode de type Gauss-Newton.

**5.** Procédé de traitement d'images suivant l'une quelconque des revendications précédentes, **caractérisé en ce qu'**au cours de l'algorithme itératif, on calcule un vecteur $\{\delta\hat{F}^e\}$ de correction vérifiant l'équation

$$[\mathbf{M}]\{\delta\hat{F}^e\} = \{\boldsymbol{\gamma}\}$$

où [M] est une matrice hessienne de dimension $8 \times 8$, ayant comme coefficients

$$M_{ij}^{(n-1)} = \sum_{ROI} \left( \nabla f(\mathbf{x}) \cdot \mathbf{\Phi}_i \left( \mathbf{x}, \left\{ \hat{F}^e \right\} \right) \right) \left( \nabla f(\mathbf{x}) \cdot \mathbf{\Phi}_j \left( \mathbf{x}, \left\{ \hat{F}^e \right\} \right) \right)$$

où *f* représente les premières valeurs de pixels de la première image, **x** représente les deux coordonnées *x* et *y* de pixels,

$\Phi_i(\mathbf{x};\{\hat{F}^e\})$ est un champ de sensibilité du champ $(u_x,u_y)$ de déplacement par rapport à la composante $\hat{F}_i^e$ du tenseur $\hat{\mathbf{F}}^e$ gradient de déformation élastique et est égal à la dérivée partielle du champ $(u_x,u_y)$ de déplacement par rapport à chaque composante $\hat{F}_i^e$ du tenseur $\hat{\mathbf{F}}^e$ gradient de déformation élastique,

{y} est le résidu ayant comme coefficients

$$\gamma_i^{(n)} = \sum_{ROI} \left( f(\mathbf{x}) - \tilde{g}^{(n)} \left( \mathbf{x}, \left\{ \hat{F}^e \right\} \right) \right) \nabla f(\mathbf{x}) \cdot \mathbf{\Phi}_i \left( \mathbf{x}, \left\{ \hat{F}^e \right\} \right),$$

$\tilde{g}^{(n)}(\mathbf{x},\{\hat{F}^e\})=\tilde{g}_u(\mathbf{x})=g(\mathbf{x}+\mathbf{u}(\mathbf{x}))$ est la troisième valeur numérique de chaque pixel de l'image déformée et *g* représente les deuxièmes valeurs de pixels de la deuxième image,

le critère de convergence sur la valeur déterminée $\hat{F}^e$ de tenseur étant que la norme du vecteur $\{\delta\hat{F}^e\}$ de correction soit inférieure à une borne positive prescrite $(\delta_\varepsilon)$, non nulle,

la valeur déterminée $\{\hat{F}^e\}$ de tenseur étant incrémentée du vecteur $\{\delta\hat{F}^e\}$ de correction à chaque itération de la première étape (E12) de calcul.

**6.** Procédé de traitement d'images suivant la revendication 5, **caractérisé en ce que** le tenseur $\hat{\mathbf{F}}^e$ gradient de déformation élastique possède, comme composantes $\hat{F}_i^e$, huit composantes $\hat{F}_1^e, \hat{F}_2^e, \hat{F}_3^e, \hat{F}_4^e, \hat{F}_5^e, \hat{F}_6^e, \hat{F}_7^e, \hat{F}_8^e$ et une neuvième composante fixée à 1, à savoir selon l'équation suivante :

$$\left[ \hat{\mathbf{F}}^e \right] = \begin{bmatrix} \hat{F}_1^e & \hat{F}_2^e & \hat{F}_3^e \\ \hat{F}_4^e & \hat{F}_5^e & \hat{F}_6^e \\ \hat{F}_7^e & \hat{F}_8^e & 1 \end{bmatrix}$$

le champ de sensibilité du champ **u(x)** de déplacement a comme composantes $\Phi_i(\mathbf{x};\{\hat{F}^e\})$ les composantes selon les équations suivantes :

$$\Phi_{x1} = \frac{z^*(x - x^*)}{\hat{F}_7^e (x - x^*) + \hat{F}_8^e (y - y^*) + z^*}$$

$$\Phi_{x2} = \frac{z^*(y - y^*)}{\hat{F}_7^e (x - x^*) + \hat{F}_8^e (y - y^*) + z^*}$$

$$\Phi_{x3} = \frac{(z^*)^2}{\hat{F}_7^e(x - x^*) + \hat{F}_8^e(y - y^*) + z^*}$$

$$\Phi_{x4} = 0$$

$$\Phi_{x5} = 0$$

$$\Phi_{x6} = 0$$

$$\Phi_{x7} = -\frac{z^*(x - x^*)(\hat{F}_1^e(x - x^*) + \hat{F}_2^e(y - y^*) + \hat{F}_3^e z^*)}{\left(\hat{F}_7^e(x - x^*) + \hat{F}_8^e(y - y^*) + z^*\right)^2}$$

$$\Phi_{x8} = -\frac{z^*(y - y^*)(\hat{F}_1^e(x - x^*) + \hat{F}_2^e(y - y^*) + \hat{F}_3^e z^*)}{\left(\hat{F}_7^e(x - x^*) + \hat{F}_8^e(y - y^*) + z^*\right)^2}$$

$$\Phi_{y1} = 0$$

$$\Phi_{y2} = 0$$

$$\Phi_{y3} = 0$$

$$\Phi_{y4} = \frac{z^*(x - x^*)}{\hat{F}_7^e(x - x^*) + \hat{F}_8^e(y - y^*) + z^*}$$

$$\Phi_{y5} = \frac{z^*(y - y^*)}{\hat{F}_7^e(x - x^*) + \hat{F}_8^e(y - y^*) + z^*}$$

$$\Phi_{y6} = \frac{(z^*)^2}{\hat{F}_7^e(x - x^*) + \hat{F}_8^e(y - y^*) + z^*}$$

$$\Phi_{y7} = -\frac{z^*(x - x^*)(\hat{F}_4^e(x - x^*) + \hat{F}_5^e(y - y^*) + \hat{F}_6^e z^*)}{\left(\hat{F}_7^e(x - x^*) + \hat{F}_8^e(y - y^*) + z^*\right)^2}$$

$$\Phi_{y8} = -\frac{z^*(y-y^*)(\hat{F}_4^e(x-x^*)+\hat{F}_5^e(y-y^*)+\hat{F}_6^e z^*)}{\left(\hat{F}_7^e(x-x^*)+\hat{F}_8^e(y-y^*)+z^*\right)^2}$$

**7.** Procédé de traitement d'images suivant l'une quelconque des revendications précédentes, **caractérisé en ce qu'**il est exécuté pour la majeure partie ou l'ensemble des pixels de la première image (*f*) et de la deuxième image (*g*).

**8.** Procédé de traitement d'images suivant l'une quelconque des revendications précédentes, **caractérisé en ce que** les première et deuxième images sont obtenues après filtrage (E4) de valeurs de pixels surexposés en les remplaçant par une moyenne de pixels voisins de ceux-ci.

**9.** Procédé de traitement d'images suivant l'une quelconque des revendications précédentes, **caractérisé en ce que** les première et deuxième images sont obtenues après filtrage (E4) des valeurs de pixels par soustraction de tendances globales de niveau de gris, représentées par un polynôme d'ordre 2 ou 3 obtenu par un processus de régression.

**10.** Procédé suivant l'une quelconque des revendications précédentes, **caractérisé en ce que** les première et deuxième images sont obtenues après filtrage (E5) des valeurs de pixels par un filtre de lissage gaussien.

**11.** Procédé de traitement d'images suivant l'une quelconque des revendications précédentes, **caractérisé en ce qu'**il est exécuté pour plusieurs deuxièmes images (*g*).

**12.** Procédé de traitement d'images suivant l'une quelconque des revendications précédentes, **caractérisé en ce que** l'on fournit (E13) sur une sortie au moins l'un parmi :

- le tenseur ($\hat{\mathbf{F}}^e$) gradient de déformation élastique, calculé comme remplissant le critère de convergence,
- un résidu (*r*), calculé comme étant la différence entre d'une part les troisièmes valeurs numériques de pixels de l'image déformée corrigée ($\tilde{g}_u$), ayant été calculées pour le champ de déplacement ($u_x$,$u_y$) correspondant comme remplissant le critère de convergence sur la valeur déterminée ($\{\hat{F}^e\}$ ) du tenseur gradient de déformation élastique, et d'autre part les premières valeurs numériques ($f(x,y)$) de pixels de la première image (*f*),
- une moyenne quadratique des résidus (*r* ) calculés pour respectivement plusieurs deuxièmes images (*g*),
- le champ de déplacement ($u_x$,$u_y$) correspondant, calculé comme remplissant le critère de convergence sur la valeur déterminée ($\{\hat{F}^e\}$ ) du tenseur gradient de déformation élastique,
- une image déformée corrigée ($\tilde{g}_u$), correspondant aux troisièmes valeurs numériques de pixels ayant été calculées à partir du champ de déplacement ($u_x$,$u_y$) correspondant, calculé comme remplissant le critère de convergence.

**13.** Procédé de traitement d'images suivant l'une quelconque des revendications précédentes, **caractérisé en ce que** les première et deuxième images sont obtenues (E3) après soustraction d'un fond d'image.

**14.** Dispositif de traitement d'images d'un matériau cristallin ou polycristallin, comportant un détecteur (10) à diffraction permettant d'acquérir :

- une première image (*f*) de diffraction du matériau se trouvant dans un état de référence, donnant des premières valeurs numériques ($f(x,y)$) de pixels en fonction de deux coordonnées *(x,y)* de pixels,
- au moins une deuxième image (*g*) de diffraction du matériau se trouvant dans un état déformé par rapport à l'état de référence, la deuxième image donnant des deuxièmes valeurs numériques *(g(x,y))* de pixels en fonction des coordonnées (*x,y*) de pixels,

**caractérisé en ce que** le dispositif comporte au moins un calculateur (12), comportant au moins une mémoire, dans laquelle est enregistrée un champ ($u_x$,$u_y$) de déplacement, pour déplacer des pixels de la première image à des pixels d'une image déformée, en fonction :

- des deux coordonnées (*x,y*) de pixels,
- de coordonnées prédéterminées ($x^*$,$y^*$,$z^*$) d'un centre (O), correspondant à la projection normale, dans le plan d'image du détecteur, d'un point source (S) du faisceau diffracté dans le matériau, et

- de composantes $(\hat{F}_1^e, \hat{F}_2^e, \hat{F}_3^e, \hat{F}_4^e, \hat{F}_5^e, \hat{F}_6^e, \hat{F}_7^e, \hat{F}_8^e)$ d'un tenseur

($\hat{\mathbf{F}}^e$ ) gradient de déformation élastique, le calculateur (12) étant configuré pour :

au cours d'une première étape (E6, E12) de calcul, faire prendre au tenseur ($\hat{\mathbf{F}}^e$ ) gradient de déformation élastique courant une valeur déterminée ($\{\hat{F}^e\}$ ),
au cours d'une deuxième étape (E7) de calcul, calculer le champ ($u_x,u_y$) de déplacement courant à partir du tenseur ($\hat{\mathbf{F}}^e$) gradient de déformation élastique courant et des coordonnées ($x,y$) pour chacun des pixels de la première image ($f$),
au cours d'une troisième étape (E8) de calcul, calculer des troisièmes valeurs numériques de pixels d'une image déformée ($\tilde{g}_u(\mathbf{x})=g(\mathbf{x}+\mathbf{u}(\mathbf{x}))$ ) en appliquant la deuxième image ($g$) aux coordonnées de pixels auxquelles a été additionné le champ de déplacement ($u_x,u_y$) courant,
au cours d'un algorithme itératif, effectuer des itérations des première, deuxième et troisième étapes (E12, E7, E8) de calcul sur des valeurs déterminées de tenseur réactualisées ($\{\hat{F}^e\}$), jusqu'à remplir un critère de convergence sur la valeur déterminée ($\{\delta\hat{F}^e\}$ ) du tenseur gradient de déformation élastique, pour calculer le champ de déplacement ($u_x,u_y$) correspondant.

**15.** Programme d'ordinateur, comportant des instructions de code pour la mise en œuvre des étapes de calcul du procédé de traitement d'images d'un matériau cristallin ou polycristallin suivant l'une quelconque des revendications 1 à 13, lorsqu'il est exécuté sur un calculateur.

## Patentansprüche

**1.** Verfahren zur Verarbeitung von Bildern eines kristallinen oder polykristallinen Materials, die von einem Beugungssensor erhalten werden, in dem durch den Detektor gemessen werden:

- ein erstes Beugungsbild **($f$)** des Materials, das sich in einem Bezugszustand befindet, das erste Zahlenwerte **($f(x,y)$)** von Pixeln in Abhängigkeit von zwei Pixelkoordinaten **(x,y)** ergibt,
- mindestens ein zweites Beugungsbild **(g)** des Materials, das sich in einem in Bezug auf den Bezugszustand verformten Zustand befindet, wobei das zweite Bild zweite Zahlenwerte **($g(x,y)$)** von Pixeln in Abhängigkeit von den Pixelkoordinaten **(x,y)** ergibt, **dadurch gekennzeichnet, dass** in einem Rechner,

ein Verschiebungsfeld ($u_x,u_y$) zum Verschieben von Pixeln des ersten Bildes zu Pixeln eines verformten Bildes in Abhängigkeit von:

- den zwei Pixelkoordinaten **(x,y),**
- von vorbestimmten Koordinaten ($x^*,y^*$) eines Zentrums (O), das der Normalprojektion eines Quellpunkts (S) des in dem Material gebeugten Strahls in der Bildebene des Detektors entspricht, und
- von Komponenten $(\hat{F}_1^e, \hat{F}_2^e, \hat{F}_3^e, \hat{F}_4^e, \hat{F}_5^e, \hat{F}_6^e, \hat{F}_7^e, \hat{F}_8^e)$ eines Gradiententensors $\hat{\mathbf{F}}^e$ der elastischen Verformung, im Voraus in einem Speicher gespeichert wird, während eines ersten Rechenschritts (E6, E12) bewirkt wird, dass der Gradiententensor $\hat{\mathbf{F}}^e$ der elastischen Verformung einen bestimmten Wert ($\{\hat{F}^e\}$) des Gradiententensors der elastischen Verformung annimmt,
während eines zweiten Rechenschnitts (E7) das aktuelle Verschiebungsfeld ($u_x,u_y$) ausgehend von dem aktuellen Gradiententensor ($\hat{\mathbf{F}}^e$) der elastischen Verformung und den Pixelkoordinaten **(x,y)** des ersten Bildes ($f$) berechnet wird,
während eines dritten Schritts (E8) dritte Pixelzahlenwerte eines verformten Bildes ( $\tilde{g}_u(\mathbf{x})=g(\mathbf{x}+\mathbf{u}(\mathbf{x}))$ durch Korrigieren des zweiten Bildes ($g$) an den Pixelkoordinaten, zu denen das aktuelle Verschiebungsfeld ($u_x,u_y$) addiert wurde, berechnet werden,
während eines iterativen Algorithmus Iterationen des ersten, des zweiten und des dritten Berechnungsschritts (E12, E7, E8) auf bestimmten geänderten Tensorwerten ($\{\hat{F}^e\}$) durchgeführt werden, bis ein Konvergenzkriterium auf dem bestimmten Wert ($\{\hat{F}^e\}$) des Gradiententensors der elastischen Verformung erfüllt wird, um das entsprechende Verschiebungsfeld ($u_x,u_y$) zu berechnen.

**2.** Bildverarbeitungsverfahren nach Anspruch 1, **dadurch gekennzeichnet, dass** der Gradiententensor $\hat{\mathbf{F}}^e$ der elas-

tischen Verformung gleich:

$$\left[\hat{\mathbf{F}}^e\right] = \begin{bmatrix} \hat{F}_1^e & \hat{F}_2^e & \hat{F}_3^e \\ \hat{F}_4^e & \hat{F}_5^e & \hat{F}_6^e \\ \hat{F}_7^e & \hat{F}_8^e & 1 \end{bmatrix}$$

ist, wo $\hat{F}_1^e,\ \hat{F}_2^e,\ \hat{F}_3^e,\ \hat{F}_4^e,\ \hat{F}_5^e,\ \hat{F}_6^e,\ \hat{F}_7^e,\ \hat{F}_8^e$ Komponenten des Gradiententensors $\hat{\mathbf{F}}^e$ der elastischen Verformung sind.

3. Bildverarbeitungsverfahren nach einem der vorhergehenden Ansprüche, **dadurch gekennzeichnet, dass** das Verschiebungsfeld $u_x, u_y$ zum Verschieben der Pixel des ersten Bildes zu Pixeln eines verformten Bildes in Abhängigkeit von:

- den zwei Pixelkoordinaten **x,y,**
- den vorbestimmten Koordinaten $x^*, y^*, z^*$ des Zentrums (O), das der Normalprojektion des Quellpunkts (S) des in dem Material gebeugten Strahls in der Bildebene des Detektors entspricht, und
- den Komponenten $\hat{F}_1^e,\ \hat{F}_2^e,\ \hat{F}_3^e,\ \hat{F}_4^e,\ \hat{F}_5^e,\ \hat{F}_6^e,\ \hat{F}_7^e,\ \hat{F}_8^e$ des Gradiententensors $\hat{\mathbf{F}}^e$ der elastischen Verformung, gleich

$$u_x(x,y) = \frac{z^*\ (\hat{F}_1^e(x-x^*) + (\hat{F}_2^e(y-y^*) + \hat{F}_3^e z^*)}{\hat{F}_7^e(x-x^*) + \hat{F}_8^e(y-y^*) + z^*} - (x-x^*)$$

$$u_y(x,y) = \frac{z^*\ (\hat{F}_4^e(x-x^*) + (\hat{F}_5^e(y-y^*) + \hat{F}_6^e z^*)}{\hat{F}_7^e(x-x^*) + \hat{F}_8^e(y-y^*) + z^*} - (y-y^*)$$

ist.

4. Bildverarbeitungsverfahren nach einem der vorhergehenden Ansprüche, **dadurch gekennzeichnet, dass** der iterative Algorithmus durch ein Verfahren vom Typ Gauß-Newton durchgeführt wird.

5. Bildverarbeitungsverfahren nach einem der vorhergehenden Ansprüche, **dadurch gekennzeichnet, dass** während des iterativen Algorithmus ein Korrekturvektor $\{\delta\hat{F}^e\}$ berechnet wird, der die Gleichung

$$[\mathbf{M}]\left\{\delta\hat{F}^e\right\} = \{\boldsymbol{\gamma}\}$$

erfüllt, wo [M] eine Hesse-Matrix mit der Dimension 8 × 8 ist, die als Koeffizienten

$$M_{ij}^{(n-1)} = \sum_{ROI} \left(\nabla f(\mathbf{x}) \cdot \mathbf{\Phi}_i\left(\mathbf{x}, \left\{\hat{F}^e\right\}\right)\right)\left(\nabla f(\mathbf{x}) \cdot \mathbf{\Phi}_j\left(\mathbf{x}, \left\{\hat{F}^e\right\}\right)\right)$$

aufweist, wo $f$ die ersten Pixelwerte des ersten Bildes darstellt, **x** die zwei Pixelkoordinaten $x$ und $y$ darstellt,

$\Phi_i(\mathbf{x};\{\hat{F}^e\})$ ein Empfindlichkeitsfeld des Verschiebungsfeldes $(u_x, u_y)$ in Bezug auf die Komponente $\hat{F}_i^e$ des Gradiententensors $\hat{\mathbf{F}}^e$ der elastischen Verformung ist und gleich der partiellen Ableitung des Verschiebungs-

feldes ($u_x$,$u_y$) in Bezug auf jede Komponente $\hat{F}_i^e$ des Gradiententensors $\hat{\mathbf{F}}^e$ der elastischen Verformung ist, {$\gamma$} der Rest ist, der als Koeffizienten aufweist:

$$\gamma_i^{(n)} = \sum_{ROI} \left( f(\mathbf{x}) - \tilde{g}^{(n)}\left(\mathbf{x}, \left\{\hat{F}^e\right\}\right)\right) \nabla f(\mathbf{x}) \cdot \mathbf{\Phi}_i\left(\mathbf{x}, \left\{\hat{F}^e\right\}\right),$$

$\tilde{g}^{(n)}(\mathbf{x},\{\hat{F}^e\})=\tilde{g}_u(\mathbf{x})=g(\mathbf{x}+\mathbf{u}(\mathbf{x}))$ der dritte Zahlenwert von jedem Pixel des verformten Bildes ist und $g$ die zweiten Pixelwerte des zweiten Bildes darstellt,
das Konvergenzkriterium auf dem bestimmten Tensorwert $\hat{F}^e$ ist, dass die Norm des Korrekturvektors $\{\delta\hat{F}^e\}$ kleiner als eine vorgeschriebene positive Schranke ($\delta_\varepsilon$) ungleich null ist,
der bestimmte Tensorwert $\{\hat{F}^e\}$ bei jeder Iteration des ersten Rechenschritts (E12) um den Korrekturvektor $\{\delta\hat{F}^e\}$ inkrementiert wird.

6. Bildverarbeitungsverfahren nach Anspruch 5, **dadurch gekennzeichnet, dass** der Gradiententensor $\hat{\mathbf{F}}^e$ der elastischen Verformung als Komponenten $\hat{F}_i^e$ acht Komponenten $\hat{F}_1^e$, $\hat{F}_2^e$, $\hat{F}_3^e$, $\hat{F}_4^e$, $\hat{F}_5^e$, $\hat{F}_6^e$, $\hat{F}_7^e$, $\hat{F}_8^e$ und eine neunte Komponente besitzt, die auf 1 festgelegt ist, und zwar gemäß der folgenden Gleichung:

$$\left[\hat{\mathbf{F}}^e\right] = \begin{bmatrix} \hat{F}_1^e & \hat{F}_2^e & \hat{F}_3^e \\ \hat{F}_4^e & \hat{F}_5^e & \hat{F}_6^e \\ \hat{F}_7^e & \hat{F}_8^e & 1 \end{bmatrix}$$

das Empfindlichkeitsfeld des Verschiebungsfeldes u(x) als Komponenten $\Phi_i(\mathbf{x};\{\hat{F}^e\})$ die Komponenten gemäß den folgenden Gleichungen aufweist:

$$\Phi_{x1} = \frac{z^*\,(x-x^*)}{\hat{F}_7^e(x-x^*)+\hat{F}_8^e(y-y^*)+z^*}$$

$$\Phi_{x2} = \frac{z^*\,(y-y^*)}{\hat{F}_7^e(x-x^*)+\hat{F}_8^e(y-y^*)+z^*}$$

$$\Phi_{x3} = \frac{(z^*)^2}{\hat{F}_7^e(x-x^*)+\hat{F}_8^e(y-y^*)+z^*}$$

$$\Phi_{x4} = 0$$

$$\Phi_{x5} = 0$$

$$\Phi_{x6} = 0$$

$$\Phi_{x7} = -\frac{z^*(x-x^*)\,(\hat{F}_1^e(x-x^*)+(\hat{F}_2^e(y-y^*)+\hat{F}_3^e z^*)}{(\hat{F}_7^e(x-x^*)+\hat{F}_8^e(y-y^*)+z^*)^2}$$

$$\Phi_{x8} = -\frac{z^*(y-y^*)\,(\hat{F}_1^e(x-x^*)+\hat{F}_2^e(y-y^*)+\hat{F}_3^e z^*)}{(\hat{F}_7^e(x-x^*)+\hat{F}_8^e(y-y^*)+z^*)^2}$$

$$\Phi_{y1} = 0$$

$$\Phi_{y2} = 0$$

$$\Phi_{y3} = 0$$

$$\Phi_{y4} = \frac{z^*\,(x-x^*)}{\hat{F}_7^e(x-x^*)+\hat{F}_8^e(y-y^*)+z^*}$$

$$\Phi_{y5} = \frac{z^*\,(y-y^*)}{\hat{F}_7^e(x-x^*)+\hat{F}_8^e(y-y^*)+z^*}$$

$$\Phi_{y6} = \frac{(z^*)^2}{\hat{F}_7^e(x-x^*)+\hat{F}_8^e(y-y^*)+z^*}$$

$$\Phi_{y7} = -\frac{z^*(x-x^*)\,(\hat{F}_4^e(x-x^*)+\hat{F}_5^e(y-y^*)+\hat{F}_6^e z^*)}{(\hat{F}_7^e(x-x^*)+\hat{F}_8^e(y-y^*)+z^*)^2}$$

$$\Phi_{y8} = -\frac{z^*(y-y^*)\,(\hat{F}_4^e(x-x^*)+\hat{F}_5^e(y-y^*)+\hat{F}_6^e z^*)}{(\hat{F}_7^e(x-x^*)+\hat{F}_8^e(y-y^*)+z^*)^2}$$

**7.** Bildverarbeitungsverfahren nach einem der vorhergehenden Ansprüche, **dadurch gekennzeichnet, dass** es für den größten Teil oder sämtliche der Pixel des ersten Bildes (*f*) und des zweiten Bildes (g) ausgeführt wird.

**8.** Bildverarbeitungsverfahren nach einem der vorhergehenden Ansprüche, **dadurch gekennzeichnet, dass** das erste und das zweite Bild nach Filterung (E4) von überbelichteten Pixelwerten erhalten werden, indem sie durch ein Mittel von ihnen benachbarten Pixeln ersetzt werden.

**9.** Bildverarbeitungsverfahren nach einem der vorhergehenden Ansprüche, **dadurch gekennzeichnet, dass** das erste und das zweite Bild nach Filterung (E4) der Pixelwerte durch Subtraktion von Gesamttendenzen von Graustufen erhalten werden, die durch ein Polynom der Ordnung 2 oder 3 dargestellt werden, das durch einen Regressionsprozess erhalten wird.

**10.** Verfahren nach einem der vorhergehenden Ansprüche, **dadurch gekennzeichnet, dass** das erste und das zweite Bild nach Filterung (E5) der Pixelwerte durch ein Gaußsches Glättungsfilter erhalten werden.

**11.** Bildverarbeitungsverfahren nach einem der vorhergehenden Ansprüche, **dadurch gekennzeichnet, dass** es für mehrere zweite Bilder (g) ausgeführt wird.

**12.** Bildverarbeitungsverfahren nach einem der vorhergehenden Ansprüche, **dadurch gekennzeichnet, dass** an einem Ausgang mindestens eines von Folgendem bereitgestellt (E13) wird:

- der Gradiententensor ($\hat{\mathbf{F}}^e$) der elastischen Verformung, der als das Konvergenzkriterium erfüllend berechnet wird,
- ein Rest (r), der als die Differenz zwischen einerseits den dritten Zahlenwerten von Pixeln des korrigierten

verformten Bildes ($\tilde{g}_u$), die für das entsprechende Verschiebungsfeld ($u_x,u_y$) als das Konvergenzkriterium auf dem bestimmten Wert ({$\tilde{F}^e$}) des Gradiententensors der elastischen Verformung erfüllend berechnet wurden, und andererseits den ersten Zahlenwerten ($f(x,y)$) von Pixeln des ersten Bildes ($f$) berechnet wird,
- ein quadratisches Mittel der jeweils für mehrere zweite Bilder (g) berechneten Reste (r),
- das entsprechende Verschiebungsfeld ($u_x,u_y$), das als das Konvergenzkriterium auf dem bestimmten Wert ( {$\tilde{F}^e$}) des Gradiententensors der elastischen Verformung erfüllend berechnet wurde,
- ein korrigiertes verformtes Bild ($\tilde{g}_u$), das den dritten Zahlenwerten von Pixeln entspricht, die ausgehend von dem entsprechenden Verschiebungsfeld ($u_x,u_y$) berechnet wurden, das als das Konvergenzkriterium erfüllend berechnet wurde.

**13.** Bildverarbeitungsverfahren nach einem der vorhergehenden Ansprüche, **dadurch gekennzeichnet, dass** das erste und das zweite Bild nach Subtraktion eines Bildhintergrunds erhalten (E3) werden.

**14.** Vorrichtung zur Verarbeitung von Bildern eines kristallinen oder polykristallinen Materials, das einen Beugungsdetektor (10) umfasst, der es ermöglicht, zu erfassen:

- ein erstes Beugungsbild ($f$) des Materials, das sich in einem Bezugszustand befindet, was erste Zahlenwerte ($f(x,y)$) von Pixeln in Abhängigkeit von zwei Pixelkoordinaten (x,y) ergibt,
- mindestens ein zweites Beugungsbild (g) des Materials, das sich in einem in Bezug auf den Bezugszustand verformten Zustand befindet, wobei das zweite Bild zweite Zahlenwerte ($g(x,y)$) von Pixeln in Abhängigkeit von den zwei Pixelkoordinaten (x,y) ergibt, **dadurch gekennzeichnet, dass** die Vorrichtung mindestens einen Rechner (12) umfasst, der mindestens einen Speicher umfasst, in dem ein Verschiebungsfeld ($u_x,u_y$) gespeichert ist, um Pixel des ersten Bildes in Abhängigkeit von Folgendem zu Pixeln eines verformten Bildes zu verschieben:
- von den zwei Pixelkoordinaten (x,y),
- von vorbestimmten Koordinaten (x*,y*,z*) eines Zentrums (O), das der Normalprojektion eines Quellpunkts (S) des in dem Material gebeugten Strahls in der Bildebene des Detektors entspricht, und
- von Komponenten $(\hat{F}_1^e,\ \hat{F}_2^e,\ \hat{F}_3^e,\ \hat{F}_4^e,\ \hat{F}_5^e,\ \hat{F}_6^e,\ \hat{F}_7^e,\ \hat{F}_8^e)$ eines Gradiententensors ($\hat{F}^e$) der elastischen Verformung,

wobei der Rechner (12) konfiguriert ist zum:

während eines ersten Rechenschritts (E6, E12, Bewirken, dass der aktuelle Gradiententensor ($\hat{F}^e$) der elastischen Verformung einen bestimmten Wert ({$\hat{F}^e$}) annimmt,
während eines zweiten Rechenschritts (E7), Berechnen des aktuellen Verschiebungsfeldes ($u_x,u_y$) ausgehend von dem aktuellen Gradiententensor ($\hat{F}^e$) der elastischen Verformung und den Koordinaten (x,y) für jedes Pixel des ersten Bildes ($f$),
während eines dritten Rechenschritts (E8), Berechnen dritter Zahlenwerte von Pixeln eines verformten Bildes ($\tilde{g}_u(\mathbf{x}) = g(\mathbf{x} + \mathbf{u}(\mathbf{x}))$ durch Anwenden des zweiten Bildes ($g$) auf die Koordinaten von Pixeln, zu denen das aktuelle Verschiebungsfeld ($u_x,u_y$) addiert wurde,
während eines iterativen Algorithmus, Durchführen von Iterationen des ersten, des zweiten und des dritten Rechenschritts (E12, E7, E8) auf bestimmten erneut aktualisierten Tensorwerten ({$\hat{F}^e$}), bis ein Konvergenzkriterium auf dem bestimmten Wert ({$\delta\hat{F}^e$}) des Gradiententensors der elastischen Verformung erfüllt wird, um das entsprechende Verschiebungsfeld ($u_x,u_y$) zu berechnen.

**15.** Computerprogramm, das Codeanweisungen für das Durchführen der Rechenschritte des Verfahrens zur Verarbeitung von Bildern eines kristallinen oder polykristallinen Materials nach einem der Ansprüche 1 bis 13 umfasst, wenn es auf einem Rechner ausgeführt wird.

## Claims

**1.** A method for processing images, obtained by a diffraction detector, of a crystalline or polycrystalline material, in which the detector is used to measure:

- a first diffraction image ($f$) of the material when the material is in a reference state, giving first digital pixel values ($f(x,y)$) as a function of two pixel coordinates ($x,y$),
- at least a second diffraction image (g) of the material when the material is in a deformed state with respect to the reference state, the second image giving second digital pixel values ($g(x,y)$) as a function of the pixel coordinates (x,y),

**characterized in that** in a calculator,
previously storing in a memory a displacement field ($u_x,u_y$), for displacing pixels of the first image to pixels of a deformed image, as a function of:

- the two pixel coordinates (x,y),
- predetermined coordinates ($x^*$, $y^*$) of a center (O), corresponding to a normal projection, in an image plane of the detector, of a source point (S) of the beam diffracted in the material, and
- components ($\hat{F}_1^e, \hat{F}_2^e, \hat{F}_3^e, \hat{F}_4^e, \hat{F}_5^e, \hat{F}_6^e, \hat{F}_7^e, \hat{F}_8^e$) of an elastic deformation gradient tensor $\hat{\mathbf{F}}^e$,

during a first computing step (E6, E12), making the elastic deformation gradient tensor $\hat{\mathbf{F}}^e$ to take a determined value ($\{\hat{F}^e\}$) of the elastic deformation gradient tensor,
during a second computing step (E7), computing the current displacement field ($u_x,u_y$) from the current elastic deformation gradient tensor ($\hat{\mathbf{F}}^e$) and from the pixel coordinates (x,y) of the first image ($f$),
during a third computing step (E8), computing third digital pixel values of a deformed image ($\tilde{g}_u(\mathbf{x}) = g(\mathbf{x} + \mathbf{u}(\mathbf{x}))$) by correcting the second image (g) at the pixel coordinates to which the current displacement field ($u_x,u_y$) has been added,
over an iterative algorithm, making iterations of the first, second and third computing steps (E12, E7, E8) on modified determined tensor values ($\{\hat{F}^e\}$), until a criterion of convergence on the determined value ($\{\hat{F}^e\}$) of the elastic deformation gradient tensor is fulfilled, to compute the corresponding displacement field ($u_x,u_y$).

2. The method for processing images as claimed in claim 1, **characterized in that** the elastic deformation gradient tensor $\hat{\mathbf{F}}^e$ is equal to

$$\left[\hat{\mathbf{F}}^e\right] = \begin{bmatrix} \hat{F}_1^e & \hat{F}_2^e & \hat{F}_3^e \\ \hat{F}_4^e & \hat{F}_5^e & \hat{F}_6^e \\ \hat{F}_7^e & \hat{F}_8^e & 1 \end{bmatrix}$$

where $\hat{F}_1^e, \hat{F}_2^e, \hat{F}_3^e, \hat{F}_4^e, \hat{F}_5^e, \hat{F}_6^e, \hat{F}_7^e, \hat{F}_8^e$ are the components of the elastic deformation gradient tensor $\hat{\mathbf{F}}^e$.

3. The method for processing images as claimed in any of the preceding claims, **characterized in that** the displacement field $u_x,u_y$, for displacing pixels of the first image to pixels of a deformed image, as a function of:

- the two pixel coordinates x,y,
- predetermined coordinates $x^*,y^*$, $z^*$ of the center (O), corresponding to the normal projection, in the image plane of the detector, of the source point (S) of the beam diffracted in the material, and
- components $\hat{F}_1^e, \hat{F}_2^e, \hat{F}_3^e, \hat{F}_4^e, \hat{F}_5^e, \hat{F}_6^e, \hat{F}_7^e, \hat{F}_8^e$ of the elastic deformation gradient tensor $\hat{\mathbf{F}}^e$,

is equal to

$$u_x(x,y) = \frac{z^*(\hat{F}_1^e(x-x^*) + \hat{F}_2^e(y-y^*) + \hat{F}_3^e z^*)}{\hat{F}_7^e(x-x^*) + \hat{F}_8^e(y-y^*) + z^*} - (x - x^*)$$

$$u_y(x,y)=\frac{z^*(\hat{F}_4^e(x-x^*)+\hat{F}_5^e(y-y^*)+\hat{F}_6^e z^*)}{\hat{F}_7^e(x-x^*)+\hat{F}_8^e(y-y^*)+z^*}-(y-y^*)$$

4. The method for processing images as claimed in any of the preceding claims, **characterized in that** the iterative algorithm is carried out by a method of Gauss-Newton type.

5. The method for processing images as claimed in any of the preceding claims, **characterized by** computing over the iterative algorithm a correction vector $\{\delta\hat{F}^e\})$ verifying the equation

$$[\mathbf{M}]\{\delta\hat{F}^e\}=\{\boldsymbol{\gamma}\}$$

where [M] is a Hessian matrix of dimension 8 × 8, having as coefficients

$$M_{ij}^{(n-1)}=\sum_{ROI}\left(\nabla f(\mathbf{x})\cdot\mathbf{\Phi}_i\left(\mathbf{x},\{\hat{F}^e\}\right)\right)\left(\nabla f(\mathbf{x})\cdot\mathbf{\Phi}_j\left(\mathbf{x},\{\hat{F}^e\}\right)\right)$$

where f represents the first pixel values of the first image, **x** represents the two pixel coordinates *x* and *y*,

$\Phi_i(\mathbf{x};\{\hat{F}^e\})$ is a sensitivity field of the displacement field $(u_x,u_y)$ with respect to the component $\hat{F}_i^e$ of the elastic deformation gradient tensor $\hat{\mathbf{F}}^e$ and is equal to the partial derivative of the displacement field $(u_x,u_y)$ with respect to each component $\hat{F}_i^e$ of the elastic deformation gradient tensor $\hat{\mathbf{F}}^e$,
$\{\gamma\}$ is a residual having as coefficients

$$\gamma_i^{(n)}=\sum_{ROI}\left(f(\mathbf{x})-\tilde{g}^{(n)}\left(\mathbf{x},\{\hat{F}^e\}\right)\right)\nabla f(\mathbf{x})\cdot\mathbf{\Phi}_i\left(\mathbf{x},\{\hat{F}^e\}\right),$$

$\tilde{g}^{(n)}(\mathbf{x},\{\hat{F}^e\})=\tilde{g}_u(\mathbf{x})=g(\mathbf{x}+\mathbf{u}(\mathbf{x}))$ is the third digital value of each pixel of the deformed image and g represents the second pixel values of the second image,
the criterion of convergence on the determined tensor value $\hat{F}^e$ being that a norm of the correction vector $\{\delta\hat{F}^e\}$ be less than a specified, non-zero positive bound $(\delta_\varepsilon)$,
the determined tensor value $\{\hat{F}^e\}$ being incremented by the correction vector $\{\delta\hat{F}^e\}$ at each iteration of the first computing step (E12).

6. The method for processing images as claimed in claim 5, **characterized in that** the elastic deformation gradient tensor $\hat{\mathbf{F}}^e$ has, as components $\hat{F}_i^e$, eight components $\hat{F}_1^e,\hat{F}_2^e,\hat{F}_3^e,\hat{F}_4^e,\hat{F}_5^e,\hat{F}_6^e,\hat{F}_7^e,\hat{F}_8^e$ and a ninth component set to 1, namely according to the following equation:

$$\left[\hat{\mathbf{F}}^e\right]=\begin{bmatrix}\hat{F}_1^e & \hat{F}_2^e & \hat{F}_3^e\\ \hat{F}_4^e & \hat{F}_5^e & \hat{F}_6^e\\ \hat{F}_7^e & \hat{F}_8^e & 1\end{bmatrix}$$

the sensitivity field of the displacement field u(x) has as components $\Phi_i(\mathbf{x};\{\hat{F}^e\})$ the components according to the following equations:

$$\Phi_{x1} = \frac{z^*(x - x^*)}{\hat{F}_7^e(x - x^*) + \hat{F}_8^e(y - y^*) + z^*}$$

$$\Phi_{x2} = \frac{z^*(y - y^*)}{\hat{F}_7^e(x - x^*) + \hat{F}_8^e(y - y^*) + z^*}$$

$$\Phi_{x3} = \frac{(z^*)^2}{\hat{F}_7^e(x - x^*) + \hat{F}_8^e(y - y^*) + z^*}$$

$$\Phi_{x4} = 0$$

$$\Phi_{x5} = 0$$

$$\Phi_{x6} = 0$$

$$\Phi_{x7} = -\frac{z^*(x - x^*)(\hat{F}_1^e(x - x^*) + \hat{F}_2^e(y - y^*) + \hat{F}_3^e z^*)}{\left(\hat{F}_7^e(x - x^*) + \hat{F}_8^e(y - y^*) + z^*\right)^2}$$

$$\Phi_{x8} = -\frac{z^*(y - y^*)(\hat{F}_1^e(x - x^*) + \hat{F}_2^e(y - y^*) + \hat{F}_3^e z^*)}{\left(\hat{F}_7^e(x - x^*) + \hat{F}_8^e(y - y^*) + z^*\right)^2}$$

$$\Phi_{y1} = 0$$

$$\Phi_{y2} = 0$$

$$\Phi_{y3} = 0$$

$$\Phi_{y4} = \frac{z^*(x - x^*)}{\hat{F}_7^e(x - x^*) + \hat{F}_8^e(y - y^*) + z^*}$$

$$\Phi_{y5} = \frac{z^*(y - y^*)}{\hat{F}_7^e(x - x^*) + \hat{F}_8^e(y - y^*) + z^*}$$

$$\Phi_{y6} = \frac{(z^*)^2}{\hat{F}_7^e(x-x^*)+\hat{F}_8^e(y-y^*)+z^*}$$

$$\Phi_{y7} = -\frac{z^*(x-x^*)(\hat{F}_4^e(x-x^*)+\hat{F}_5^e(y-y^*)+\hat{F}_6^e z^*)}{\left(\hat{F}_7^e(x-x^*)+\hat{F}_8^e(y-y^*)+z^*\right)^2}$$

$$\Phi_{y8} = -\frac{z^*(y-y^*)(\hat{F}_4^e(x-x^*)+\hat{F}_5^e(y-y^*)+\hat{F}_6^e z^*)}{\left(\hat{F}_7^e(x-x^*)+\hat{F}_8^e(y-y^*)+z^*\right)^2}$$

**7.** The method for processing images as claimed in any of the preceding claims, **characterized in that** the method is executed for a major part or all of the pixels of the first image (*f*) and of the second image (g).

**8.** The method for processing images as claimed in any of the preceding claims, **characterized in that** the first and second images are obtained after filtering (E4) overexposed pixel values by replacing them with an average of neighboring pixels of these.

**9.** The method for processing images as claimed in any of the preceding claims, **characterized in that** the first and second images are obtained after filtering (E4) the pixel values by subtracting global trends of gray level, represented by a polynomial of order 2 or 3 obtained by a regression process.

**10.** The method for processing images as claimed in any of the preceding claims, **characterized in that** the first and second images are obtained after filtering (E5) the pixel values by a Gaussian smoothing filter.

**11.** The method for processing images as claimed in any of the preceding claims, **characterized in that** the method is executed for several second images (g).

**12.** The method for processing images as claimed in any of the preceding claims, **characterized by** supplying (E13) at least one out of the following on an output:

- the elastic deformation gradient tensor ($\hat{\mathbf{F}}^e$), computed as fulfilling the criterion of convergence,
- a residual (*r*), computed as being a difference between, on the one hand, the third digital pixel values of the corrected deformed image ($\tilde{g}_u$), having been computed for the corresponding displacement field ($u_x,u_y$) as fulfilling the criterion of convergence on the determined value ($\{\hat{F}^e\}$) of the elastic deformation gradient tensor, and on the other hand the first digital pixel values ($f(x,y)$) of the first image (*f*),
- a quadratic mean of the residuals (r) computed for several second images (g) respectively,
- the corresponding displacement field ($u_x,u_y$), computed as fulfilling the criterion of convergence on the determined value ($\{\hat{F}^e\}$) of the elastic deformation gradient tensor,
- a corrected deformed image ($\tilde{g}_u$), corresponding to the third digital pixel values having been computed on the basis of the corresponding displacement field ($u_x,u_y$), computed as fulfilling the criterion of convergence.

**13.** The method for processing images as claimed in any of the preceding claims, **characterized in that** the first and second images are obtained (E3) after subtracting an image background.

**14.** A device for processing images of a crystalline or polycrystalline material, comprising a diffraction detector (10) making it possible to acquire:

- a first diffraction image (*f*) of the material when the material is in a reference state, giving first digital pixel values ($f(x,y)$) as a function of two pixel coordinates ($x,y$),
- at least a second diffraction image (g) of the material when the material is in a deformed state with respect to the reference state, the second image giving second digital pixel values *(g(x,y))* as a function of the pixel coordinates (x,y),

**characterized in that** the device comprises at least a calculator (12), comprising at least a memory, in which is stored a displacement field ($u_x$,$u_y$), for displacing pixels of the first image to pixels of a deformed image, as a function of:

- the two pixel coordinates (x,y),
- predetermined coordinates ($x^*$,$y^*$,$z^*$) of a center (O), corresponding to a normal projection, in an image plane of the detector, of a source point (S) of the beam diffracted in the material, and
- components $(\hat{F}_1^e, \hat{F}_2^e, \hat{F}_3^e, \hat{F}_4^e, \hat{F}_5^e, \hat{F}_6^e, \hat{F}_7^e, \hat{F}_8^e)$ of an elastic deformation gradient tensor ($\hat{\mathbf{F}}^e$),

the calculator (12) being configured for:

during a first computing step (E6, E12), making the current elastic deformation gradient tensor ($\hat{F}^e$) take a determined value ($\{\hat{F}^e\}$),
during a second computing step (E7), computing the current displacement field ($u_x$,$u_y$) on the basis of the current elastic deformation gradient tensor ($\hat{F}^e$) and of the coordinates ($x,y$) for each of the pixels of the first image ($f$),
during a third computing step (E8), computing third digital pixel values of a deformed image ($\tilde{g}_u(\mathbf{x}) = g(\mathbf{x} + \mathbf{u}(\mathbf{x}))$ ) by applying the second image (g) to the pixel coordinates to which the current displacement field ($u_x$,$u_y$) has been added,
over an iterative algorithm, making iterations of the first, second and third computing steps (E12, E7, E8) on reupdated determined tensor values ($\{\hat{F}^e\}$) , until a criterion of convergence on the determined value ($\{\delta\hat{F}^e\}$) of the elastic deformation gradient tensor is fulfilled, to compute the corresponding displacement field ($u_x$,$u_y$).

**15.** A computer program, comprising code instructions for implementing the method for processing images of a crystalline or polycrystalline material as claimed in any of claims 1 to 13, when it is executed on a calculator.

FIG. 1

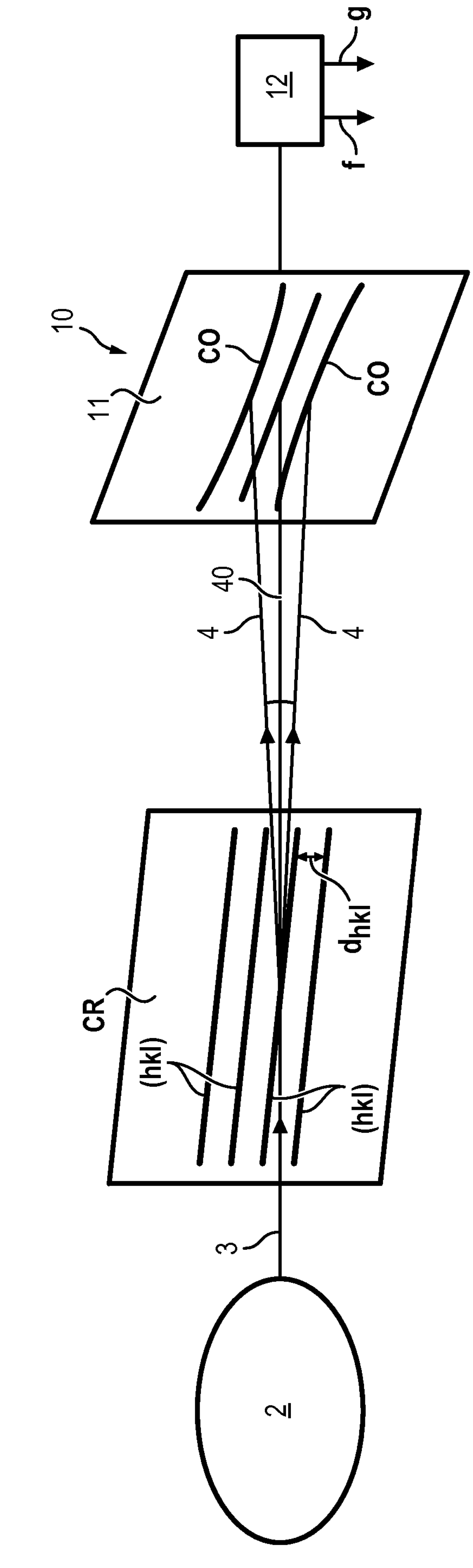

FIG. 2

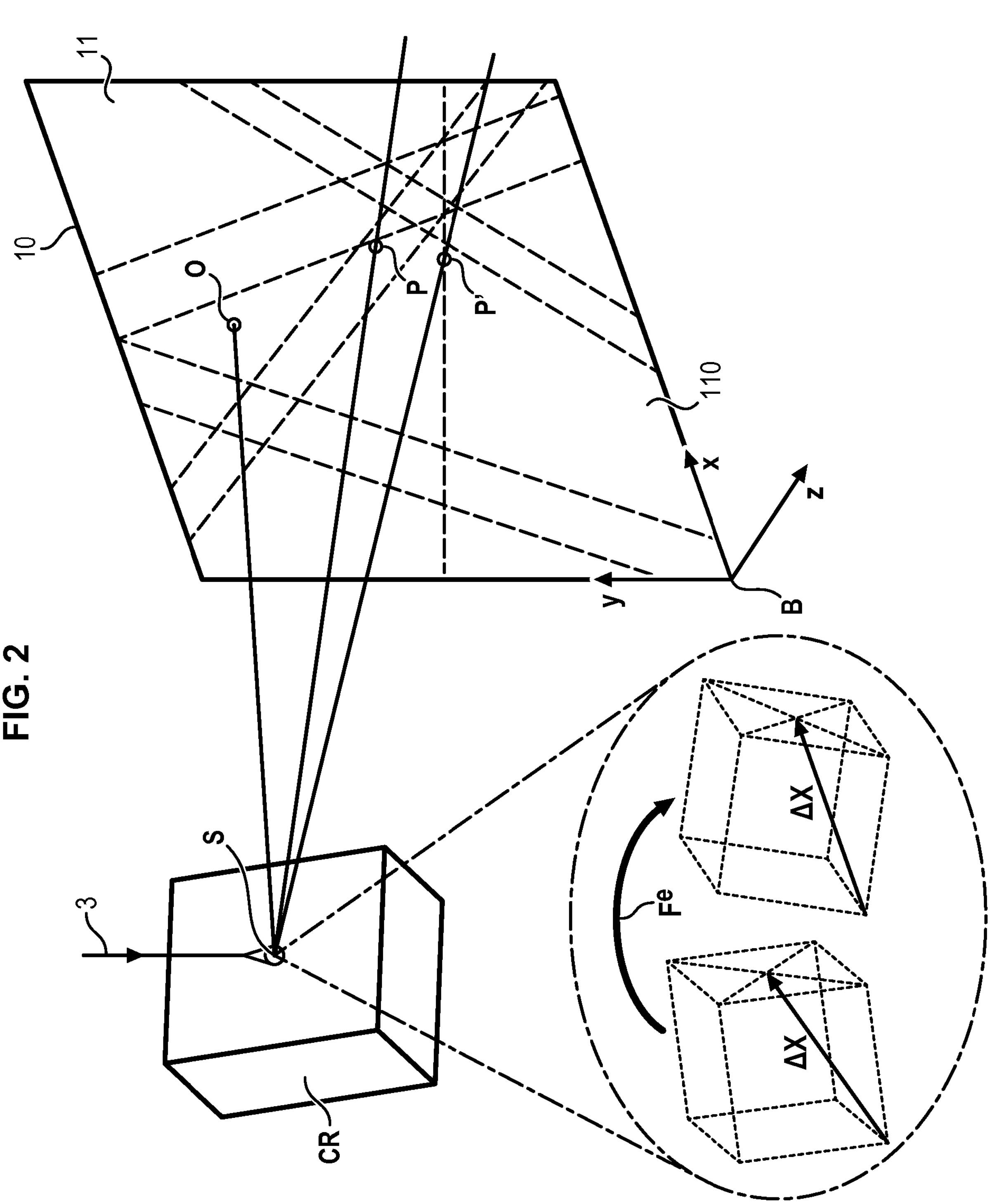

FIG. 3

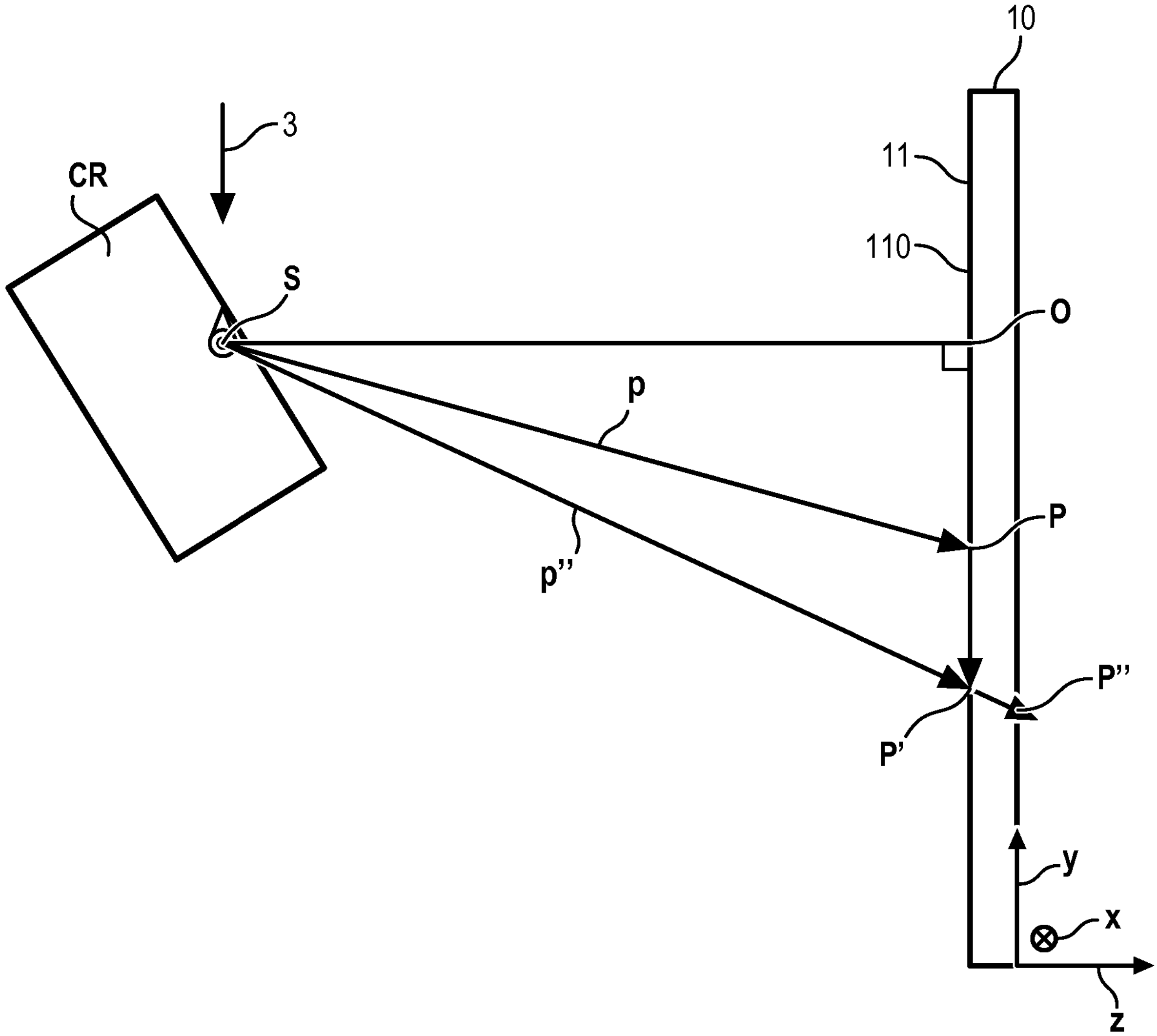

FIG. 4

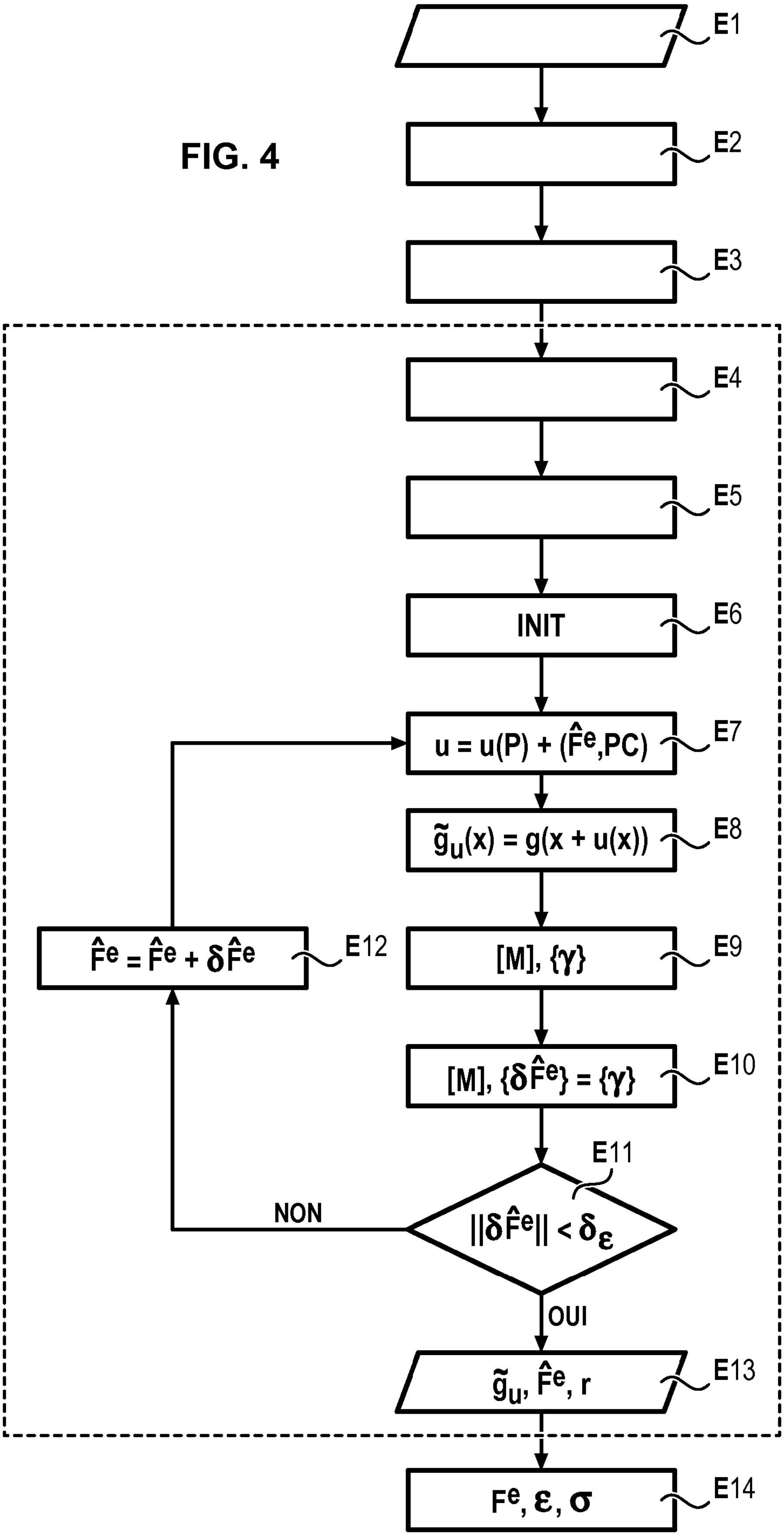
E1
E2
E3
E4
E5
INIT
E6
u = u(P) + (F̂e,PC)
E7
g̃u(x) = g(x + u(x))
E8
F̂e = F̂e + δF̂e
E12
[M], {γ}
E9
[M], {δF̂e} = {γ}
E10
E11
NON
||δF̂e|| < δε
OUI
g̃u, F̂e, r
E13
Fe, ε, σ
E14

FIG. 5A

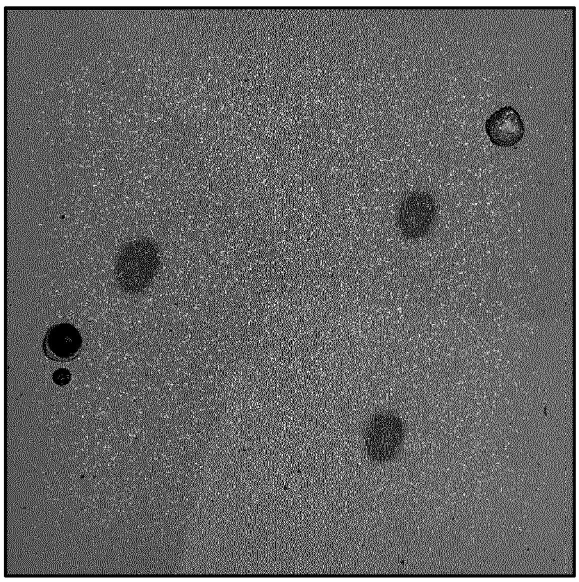

FIG. 5B

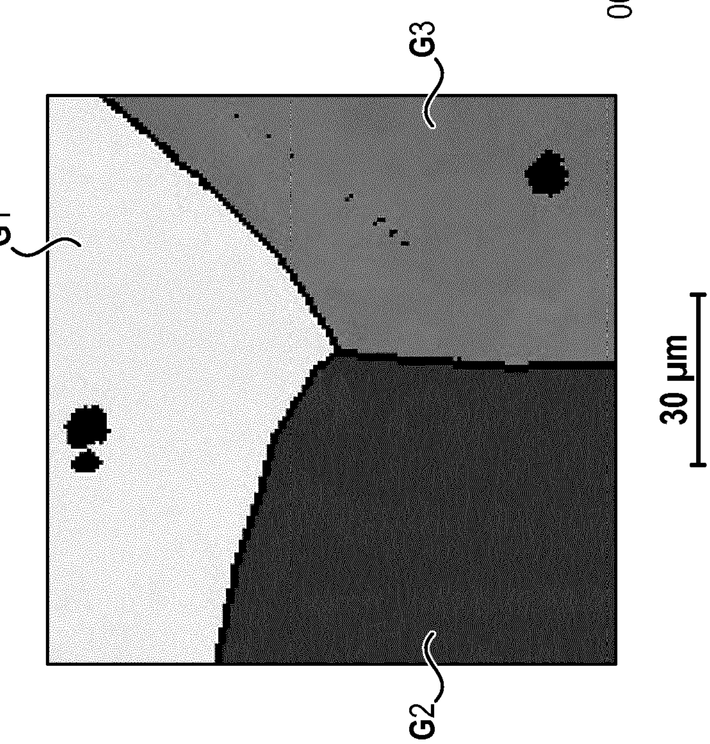


FIG. 5C

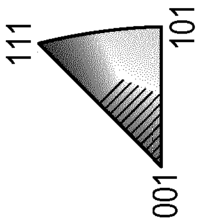

FIG. 6A

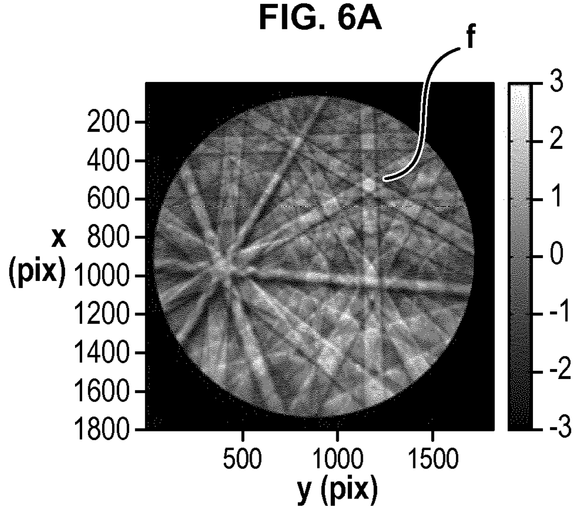


FIG. 6B

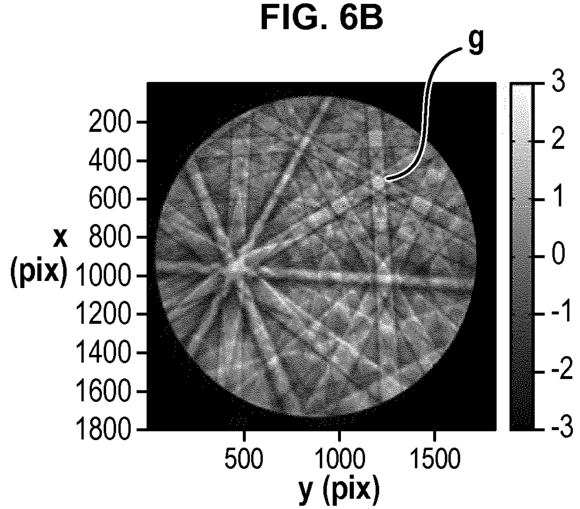


FIG. 6C

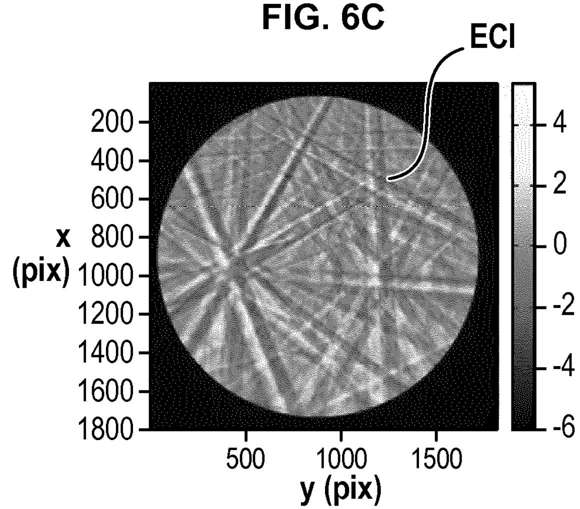


FIG. 6D

$$\hat{F}^e: \begin{bmatrix} 0.9985 & -0.0342 & 0.0207 \\ 0.0355 & 1.0040 & 0.0050 \\ -0.0181 & -0.0065 & 1.0000 \end{bmatrix}$$

FIG. 6E

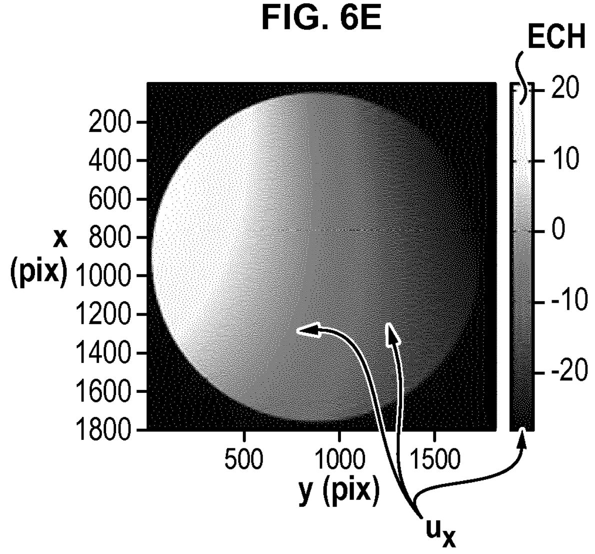


FIG. 6F

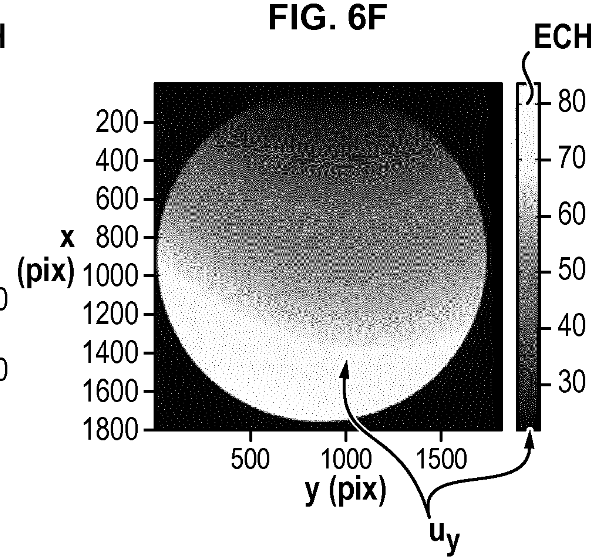

FIG. 6G
(d) $\hat{F}^e_{obtenue}$

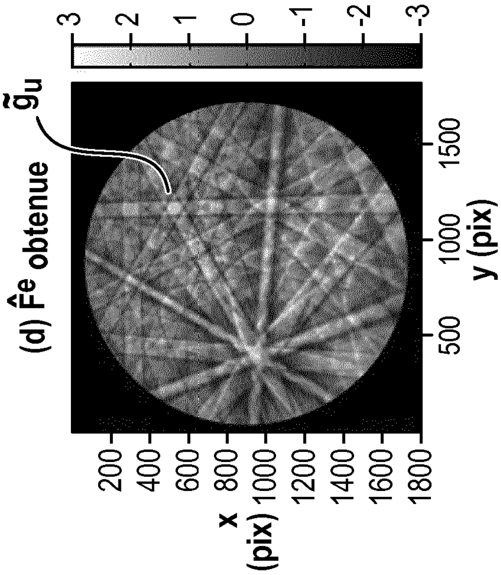


FIG. 6H

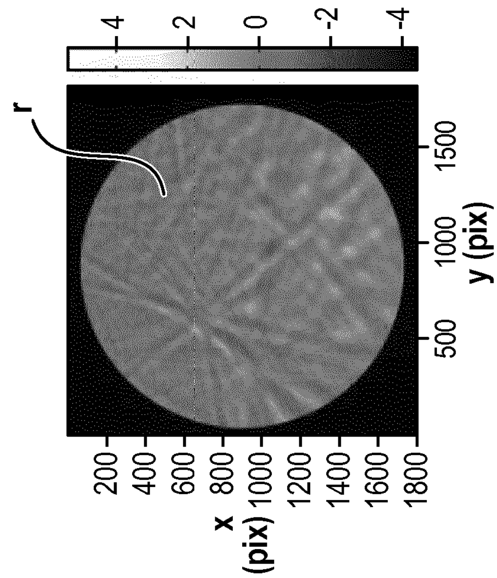


FIG. 6I

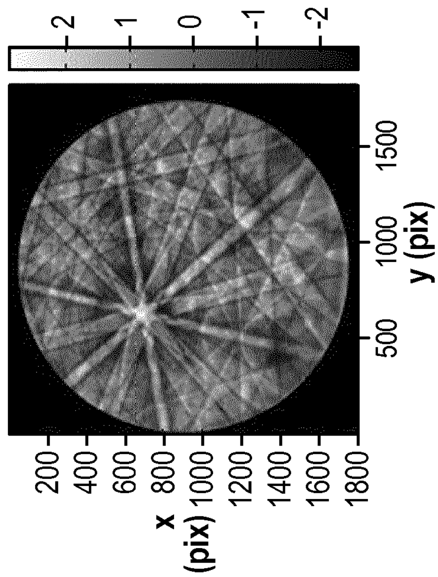

FIG. 7A

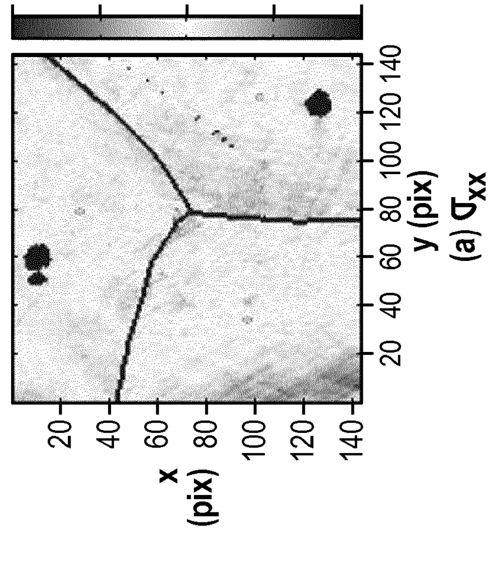


FIG. 7B

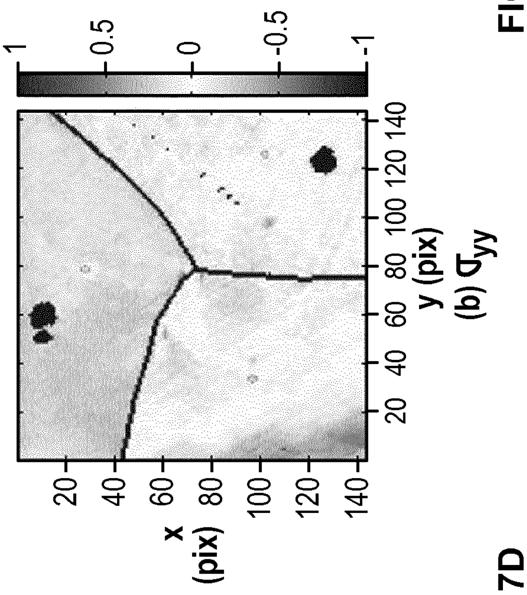


FIG. 7C

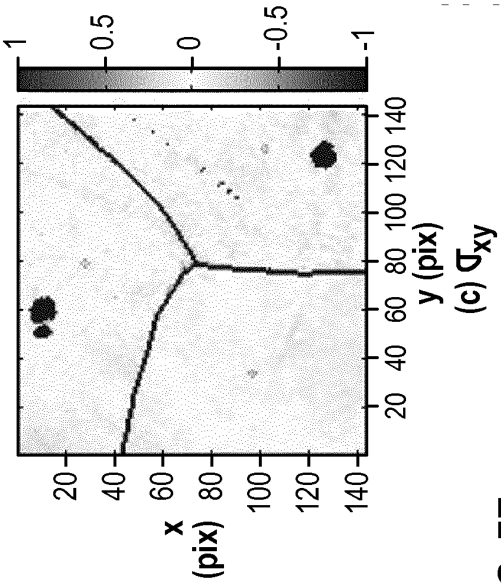


FIG. 7D

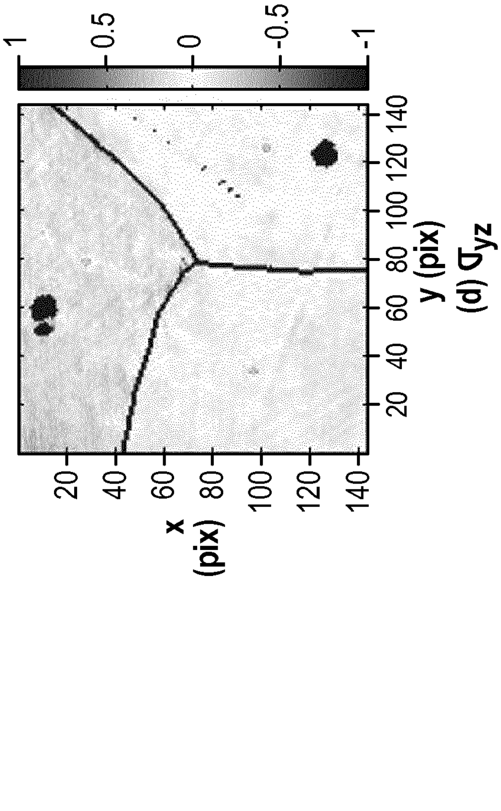


FIG. 7E

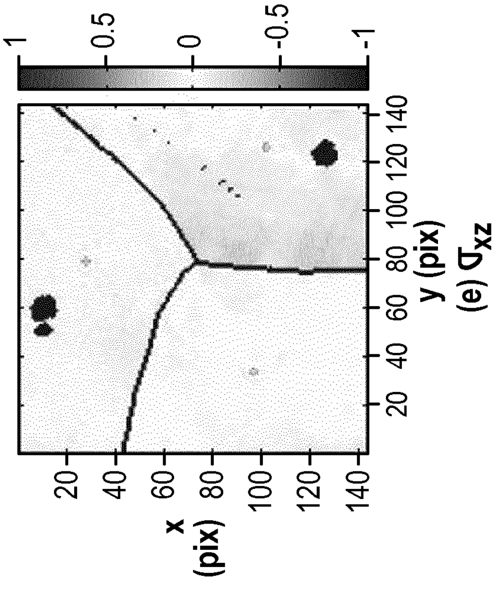

FIG. 8A

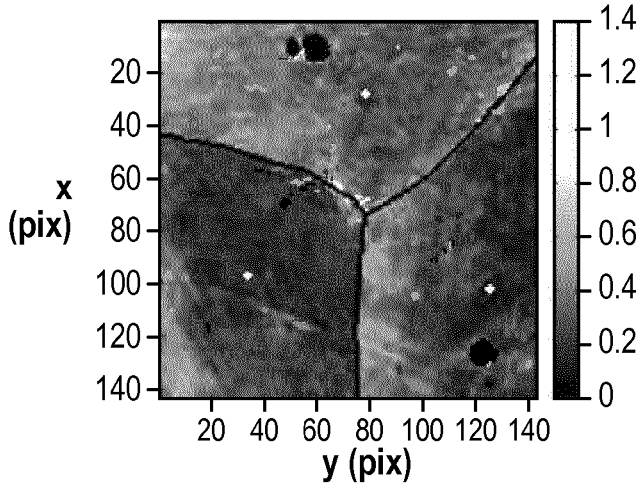
20
40
60
80
100
120
140
x
(pix)
20 40 60 80 100 120 140
y (pix)
1.4
1.2
1
0.8
0.6
0.4
0.2
0

FIG. 8B

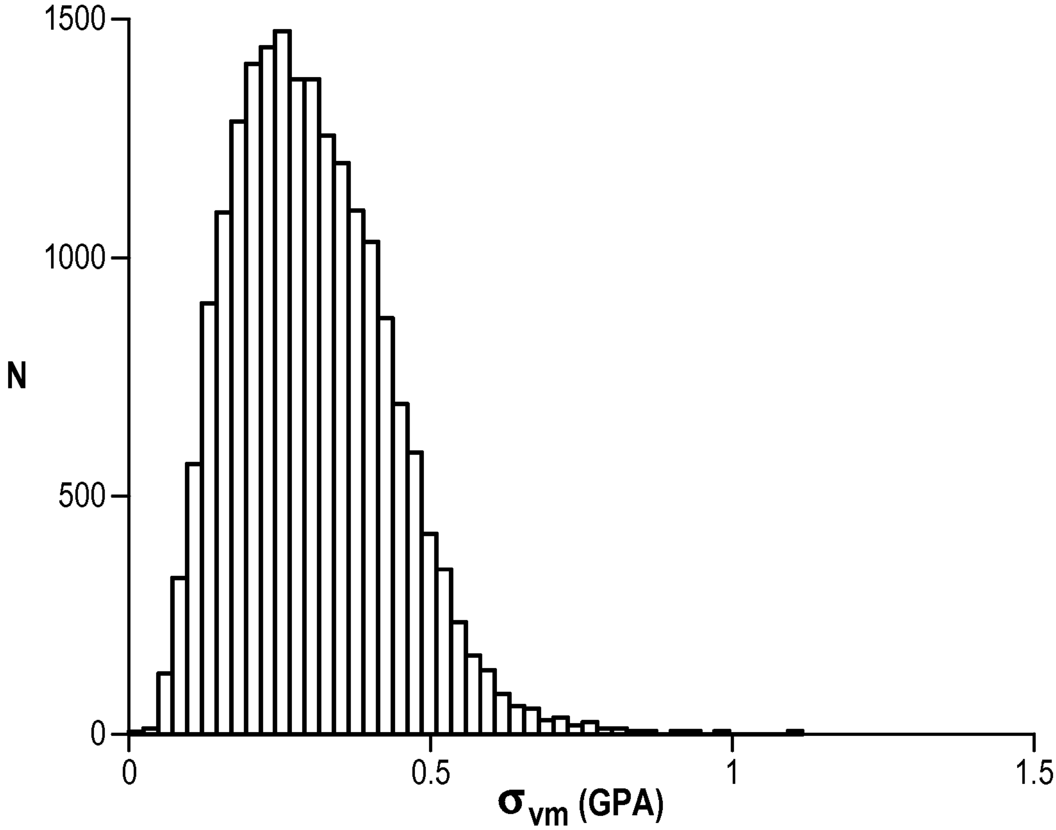
1500
1000
500
0
N
0
0.5
1
1.5
$\sigma_{vm}$ (GPA)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **RAGHAVENDRA NATARAJ SARALAYA.** In-situ Grain Scale Strain Measurements using Digital Image Correlation. Drexel University, Juin 2012
- **JUN JIANG et al.** Deformation compatibility in a single crystalline Ni superalloy. *Proc. R. Soc. A,* 13 Janvier 2016, vol. 472, ISSN 1364-5021, 20150690